(19) Europäisches Patentamt / European Patent Office / Office européen des brevets

(11) **EP 1 895 703 A1**

(12) **EUROPEAN PATENT APPLICATION**

(43) Date of publication:
**05.03.2008 Bulletin 2008/10**

(51) Int Cl.:
*H04L 5/02* (2006.01)    *H04L 25/02* (2006.01)
*H04L 27/26* (2006.01)    *H04B 7/26* (2006.01)

(21) Application number: **06116662.5**

(22) Date of filing: **05.07.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Koninklijke Philips Electronics N.V.**
**5621 BA  Eindhoven (NL)**

(72) Inventor: **The designation of the inventor has not yet been filed**

(74) Representative: **van der Veer, Johannis Leendert et al**
**Philips**
**Intellectual Property & Standards**
**P.O. Box 220**
**5600 AE  Eindhoven (NL)**

(54) **Bandwidth asymmetric communication system based on OFDM and TDMA**

(57)    The present invention relates to a communication system comprising a plurality of terminals each having an uplink transmission unit (1) for transmitting radio frequency OFDM signals at a radio frequency and an access point having an uplink receiving unit (4) for concurrently receiving said radio frequency OFDM signals from at least two terminals, said OFDM signals being Orthogonal Frequency Division Multiplex (OFDM) modulated, wherein the bandwidth of said uplink transmission units and of the transmitted radio frequency OFDM signals is smaller than the bandwidth of said uplink receiving unit, that the bandwidth of at least two uplink transmission units and of their transmitted radio frequency OFDM signals is different and that the uplink transmission unit is adapted to assign different connections for concurrently transmitting radio frequency OFDM signals to different sub-carriers in the same time slots or to the same or different sub-carriers in different time slots.

FIG.1

**Description**

FIELD OF THE INVENTION

The present invention relates to a communication system comprising a plurality of terminals each having an uplink transmission unit for transmitting radio frequency OFDM signals at a radio frequency and an access point having an uplink receiving unit for concurrently receiving said radio frequency OFDM signals from at least two terminals, said OFDM signals being Orthogonal Frequency Division Multiplex (OFDM) modulated.

The present invention relates further to a communication system wherein the access point has a downlink transmission unit for transmitting radio frequency OFDM signals at a radio frequency and that the at least two terminals each have a downlink receiving unit for receiving said radio frequency OFDM signals, wherein the downlink transmitting unit of said access unit is adapted for concurrently transmitting said radio frequency OFDM signals to said at least two downlink receiving units and wherein said downlink receiving units are adapted for receiving radio frequency OFDM signal concurrently sent from said downlink transmission unit.

Still further, the present invention relates to corresponding communication methods and to a terminal and an access point for use in such communication systems.

BACKGROUND OF THE INVENTION

All wireless communication systems known so far require both the access point (base station in a mobile telecommunication system) and the terminal (mobile station/terminal in a mobile telecommunication system) to operate at the same bandwidth. This has an economically negative consequence that a high-speed air interface cannot be cost- and power-consumption effectively used by low power and low cost terminals. Because of this traditional design, different air interfaces have to be used for different power and cost classes of terminals in order to cope with the different bandwidth, power consumption, bit rate and cost requirements. For example, Zigbee is used for very low power, low cost and low speed devices, such as wireless sensor, Bluetooth for wireless personal area network (WPAN) applications, and 802.1 1b/g/a for wireless local area network (WLAN) applications.

Orthogonal frequency division multiplexing (OFDM) systems are traditionally based on an Inverse Discrete Fourier Transform (IDFT) in the transmitter and a Discrete Fourier Transform (DFT) in the receiver, where the size of IDFT and DFT are the same. This means that if the access point (AP) is using a N-point DFT/IDFT (i.e. OFDM with N sub-carriers), the mobile terminal (MT) also has to use a N-point DFT/IDFT. Even in a multi-rate system, where the data-modulated sub-carriers are dynamically assigned to a MT according to the instant data rate of the application, the size of the MT-side DFT/IDFT is still fixed to the size of the AP-side IDFT/DFT. This has the consequence that the RF front-end bandwidth, the ADC/DAC (analog-digital-converter / digital-analog-converter) and baseband sampling rate are always the same for the AP and MT, even if the MT has much less user data to send per time unit. This makes it impossible in practice that a high-throughput AP / base station supports very low power, low cost and small-sized devices.

SUMMARY OF THE INVENTION

It is an object of the present invention to provide a communication system, a corresponding communication method and a terminal and an access point for use therein by which the implementation complexity and synchronization requirements can be reduced.

The object is achieved according to the present invention by a communication system as claimed in claim 1 which is characterized in that the bandwidth of said uplink transmission units and of the transmitted radio frequency OFDM signals is smaller than the bandwidth of said uplink receiving unit, that the bandwidth of at least two uplink transmission units and of their transmitted radio frequency OFDM signals is different and that the uplink transmission unit is adapted to assign different connections for concurrently transmitting radio frequency OFDM signals to different sub-carriers in the same time slots or to the same or different sub-carriers in different time slots and by a communication system as claimed in claim 2 which is characterized in that the bandwidth of said downlink transmission unit is larger than the bandwidth of said downlink receiving units, that the downlink transmission unit is adapted to generate and transmit radio frequency OFDM signals having a bandwidth that is smaller than or equal to the bandwidth of the downlink transmission unit and that is equal to the bandwidth of the downlink receiving unit by which the radio frequency OFDM signals shall be received and that the downlink transmission unit is adapted to assign different connections for concurrently transmitting radio frequency OFDM signals to different sub-carriers in the same time slots or to the same or different sub-carriers in different time slots.

A terminal, an access point and a communication method according to the present invention are defined in claims 8 to 30. Preferred embodiments of the terminal and the access point are defined in the dependent claims. It shall be understood that the communication system and method can be developed in the same or similar way as defined in the dependent claims of the terminal and the access point.

A paradigm shift is made in the proposed communication system design compared to known communication system designs. By exploiting a special property of OFDM and combining OFDM with other techniques it is made possible for the first time that a high bandwidth access point (base station) can support different bandwidth classes of (mobile) terminals. For example, a 1 Gbps @ 100 MHz access point of 1000 US$ can communicate with a 500 Mbps @ 50 MHz multimedia device of 200 US$ and with a 64 kpbs@10 kHz wireless sensor of 1 US$ in parallel.

Unlike the traditional OFDM systems design, where the AP and MT use the same bandwidth for the uplink transmission unit and the uplink receiving unit, in particular the same size of DFT/IDFT in said units, the new design proposed according to the present invention allows the MT to have the same or a smaller bandwidth than the AP, in particular to use the same or a smaller size of DFT/IDFT than the AP. Similarly, for downlink, the present invention allows the AP to communicate with MTs having the same or smaller bandwidth than the AP, in particular having the same or a smaller size of DFT/IDFT than the AP.

To explain this it shall first be recalled that a N-point DFT generates a discrete spectrum between the sub-carriers $-N/(2\,T_s)$ and $N/(2\,T_s)-1$, where $T_s$ is the OFDM symbol rate and N the size of DFT/IDFT. The positive most-frequent sub-carrier $N/(2T_s)$ is not included, for DFT represents a periodic spectrum. However, through investigations on the exploitation of a new property of DFT/IDFT to create a disruptive new OFDM system a new property of DFT/IDFT has been found, which is now summarized by the following two Lemmas.

Lemma 1: Let $X_{tx}(k)$ and $X_{rx}(k)$ denote the DFT spectral coefficients of the transmitter and receiver, respectively, where the transmitter uses a $N_{tx}$ point IDFT at sampling rate $F_{tx}$ to generate an OFDM signal x(t) of bandwidth $F_{tx}/2$, and the receiver uses $N_{rx}$ point DFT at sampling rate $F_{rx}$ to demodulate the received signal x(t). It holds $X_{rx}(k) = L\, X_{tx}(k)$ for $0{\leq}k{\leq}.N_{tx}-1$, and $X_{rx}(k) = 0$ for $N_{tx}{\leq}k{\leq} N_{rx}-1$, if $N_{tx}=F_{tx}/f_\Delta=2^t$, $N_{rx}=F_{rx}/f_\Delta=2^r$, r>t, and L= $N_{rx}/ N_{tx{\geq}1}$, where $f_\Delta$ is the sub-carrier spacing, which is set same for both the transmitter and receiver. Here, Lemma 1 is the theoretical foundation for uplink bandwidth asymmetry.

Lemma 2: Let $X_{tx}(k)$ and $X_{rx}(k)$ denote the DFT spectral coefficients of the transmitter and receiver, respectively, where the transmitter uses a $N_{tx}$ point IDFT at sampling rate $F_{tx}$ to generate an OFDM signal x(t) of bandwidth $F_{rx}/2$, and the receiver uses $N_{rx}$ point DFT at sampling rate $F_{rx}$ to demodulate the received signal x(t). It holds $X_{rx}(k) = X_{tx}(k) / L$ for $0{\leq}k{\leq}.N_{rx}-1$, if $N_{tx}=F_{tx}/f_\Delta=2^t,N_{rx}=F_{rx}/f_\Delta=2^r$, t>r, and L= $N_{tx}/ N_{rx{\geq}1}$, where $f_\Delta$ is the sub-carrier spacing, which is set same for both the transmitter and receiver. Here, Lemma 2 is the theoretical foundation for downlink bandwidth asymmetry.

With Lemma 1 a new type of OFDM systems can now be created, whose AP uses a single $N_{rx}$-point DFT or FFT to demodulate concurrently OFDM signals of different bandwidths that were OFDM-modulated in different MTs with $N_{tx\_i}$ point IDFTs or IFFTs, where i is the index of the MTs. The only preferred constraint is that the sub-carrier spacing $f_\Delta$ is the same for both AP and MT, and $Nt_{x\_i}=2^{t\_i}$, $N_{rx}=2^r$, $r{\geq}t\_i$.

With Lemma 2 a new type of OFDM systems can now be created, whose AP can use a single $N_{tx}$-point IDFT or IFFT to modulate concurrently OFDM signals of different bandwidths. These signals will be demodulated by MTs of different bandwidths by using $N_{rx\_i}$ point DFT or FFT, where i is the index of the MTs. The only preferred constraint is that the sub-carrier spacing $f_\Delta$ is the same for both AP and MT, and $N_{tx}=2^t$, $N_{rx\_i}=2^{r\_i}$, $t{\geq}r\_i$.

Note, for simplicity of proofs the conventional DFT indexing rule for the above Lemmas 1 and 2 is not use, it is rather assumed that the index k runs from the most negative frequency (k=0) to the most positive frequency (k=$N_{tx}$ or $N_{rx}$). However, in the following description, the conventional DFT indexing rule is assumed again.

A smaller DFT size, in general a smaller bandwidth, means lower baseband and RF front-end bandwidth, which in turn means lower baseband complexity, lower power consumption and smaller terminal size. For the extreme case, the MT only uses the two lowest-frequent sub-carriers $f_o$ and $f_1$ of the AP, thus can be of very low power and cheap. The bandwidth asymmetric communication system is thus based on a new OFDM system design which results in a reduced uplink synchronization requirement, and low implementation complexity in the access point, in particular by sharing one DFT or FFT operation for all multi-bandwidth terminals.

The present invention is further based on the idea to use the generally known TDMA (Time Division Multiple Access) technique as multiple access technique to obtain a bandwidth asymmetric OFDM communication system. Thus, according to the present invention the OFDM signal of different connections are assigned to different sub-carriers in the same time slots or to the same or different sub-carriers in different time slots to enable connection multiplex and multiple access.

Preferred embodiments of the invention are defined in the dependent claims. Claim 3 defines an embodiment of the communication system regarding the bandwidths, symbol length and guard intervals. Claims 11 to 13 define embodiments of the uplink transmission unit of the terminal, claims 25 to 30 define embodiments of the uplink receiving unit of the access point, claims 14 to 17 and 18 to 23 define corresponding embodiments for the downlink transmission unit and the downlink receiving unit.

The performance of the new system can be improved, if the access point sends or receives preambles regularly or on demand to/from the different mobile terminals as proposed according to an advantageous embodiment claimed in claims 4 and 5. In this embodiment a general downlink and uplink preamble design requirement is introduced and a set of specific preamble sequences meeting this requirement for MTs of different bandwidths is proposed.

Frame structure is always optimized for the communication system to be supported. It has great impact on the achievable system performance, including effective throughput, spectrum efficiency, service latency, robustness, and power consumption. For the new bandwidth asymmetric communication according to the present invention to work effectively, a new frame structure is proposed according to the embodiments of claims 6 and 7. Said superframe structure comprises a downlink period and an uplink period. The downlink synchronization sequence is bandwidth scalable, i.e. it must remain its good synchronization property even after BW adaptive reception/filtering by the MT.

Preferably, the downlink periods includes a number of common control channels for terminals of different bandwidths, the common control channels being used by the access point to transmit to the terminals. The common control channel is bandwidth scalable, i.e. it delivers all the necessary control information for a terminal of a given BW class even after BW adaptive reception/filtering by the MT.

With the communication system according to the present invention a terminal is able to establish one or more connections. For example, one connection can be used for voice, and another connection for video to realize a video phone; or one connection for control, and another connection for image/video data of an online game application.

According to a further embodiment reconstruction means are provided which are adapted for obtaining the information of the value of $N_{u\_tx}$ from an information included in the received radio frequency OFDM signal indicating said value or by analyzing the bandwidth of the received radio frequency OFDM signal. It is assumed that the access point knows that there are potentially many bandwidth classes. Within each bandwidth it has to do all the windowing & combining operations to detect if a MT belonging to the considered BW class has sent a signal. Alternatively, it gets this information from the upper layer. Detecting the activity within the bandwidth class is not enough. For example, a larger bandwidth MT may generate activities for all bandwidth classes below its bandwidth. It should further be noted that offset estimations (time and frequency domain), offset compensation, and channel equalization are preferably done for each MT individually.

BRIEF DESCRIPTION OF THE DRAWINGS

The invention will now be explained in more detail with reference to the drawings in which:

Fig. 1 shows a block diagram of a transmitter architecture for uplink,
Figs. 2 and 3 illustrate the signal flow in the transmitter for uplink,
Fig. 4 shows a block diagram of a receiver architecture for uplink,
Figs. 5 and 6 illustrate the signal flow in the receiver for uplink,
Fig. 7 shows a block diagram of a transmitter architecture for downlink,
Figs. 8 to 10 illustrate the signal flow in the transmitter for downlink,
Fig. 11 shows a block diagram of a receiver architecture for downlink,
Fig. 12 illustrates the signal flow in the receiver for downlink,
Fig. 13 illustrates how the different bandwidth classes share the different spectral coefficients,
Fig. 14 shows an example of the preamble design, starting with a Gold sequence for the largest bandwidth class with 12 samples,
Fig. 15 shows a block diagram of an embodiment of a transmitter architecture for uplink with preamble insertion,
Fig. 16 shows a block diagram of an embodiment of a transmitter architecture for downlink with preamble insertion,
Fig. 17 shows the structure of a superframe,
Fig. 18 shows a simple block diagram of a communications system in which the present invention can be used.

DETAILED DESCRIPTION OF EMBODIMENTS

General layout for uplink

It is known that uplink synchronization is very challenging for any OFDM system. With bandwidth asymmetric OFDM this problem would be even worse, because the miss-match between the sampling rates and low-pass filters in the access point and different terminals would further increase the degree of out of sync in a practical implementation. In an OFDM system the term synchronization covers clock, frequency, phase and timing synchronization. In general, both OFDM symbol and frame synchronization shall be taken into account when referring to timing synchronization. By the means of an innovative combination of techniques, as will become apparent from the below described embodiments, the communication system according to the invention is made robust to practical jitters in frequency, phase, clock, and timing.

Generally, the invention relates to a communication system including at least one access point, such as a base station in a telecommunications network, and at least one terminal, such as at least one mobile phone in a telecommunications network. While generally the terminals associated with the access point(s) in known communication systems necessarily need to have identical bandwidths in order to be able to communicate with each other, this is not required in the system according to the present invention.

The new transmitter concept offers the flexibility to adapt the OFDM modulation to the rate of each user connection in the MT. Let the k-th bandwidth class of MTs be defined as the class of MTs, whose FFT/IFFT has only $2^k$ coefficients, and whose baseband sampling rate is $2^k f_\Delta$. For uplink it holds $L = N_{rx}/ N_{tx} \geq 1$ with $N_{tx} = 2^k$.

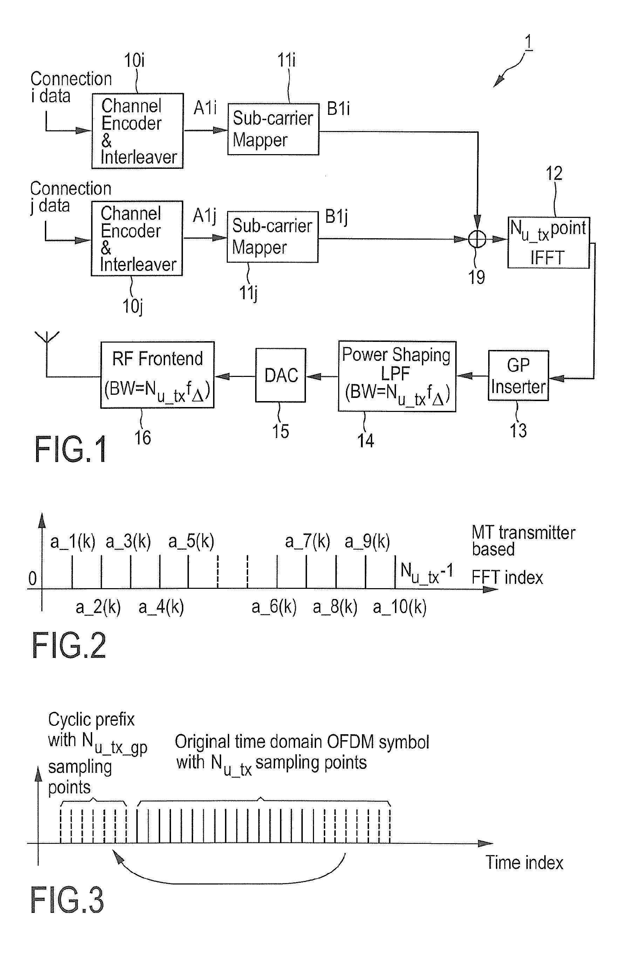

Fig. 1 shows a block diagram of a transmitter architecture for uplink, i.e. the schematic layout of the uplink transmission unit 1 of a user terminal (MT) of a specific bandwidth class for two user connections i and j according to the present invention for use in a basic asymmetric OFDM communication system. For each user connection any adaptive or non-adaptive channel encoder and interleaver 10i, 10j can be applied. Upon reception of application data, said channel encoder and interleaver 10i, 10j (generally called uplink symbol generation means) generate complex (I/Q) valued channel encoded data. It shall be noted that real-valued symbols are regarded here as a special case of complex valued data symbols with the imaginary Q-component being zero. For each new start of the OFDM symbol for the considered connections i and j, sub-carrier mappers 11i and 11j get mi and mj, respectively, channel encoded data symbols from the channel encoder and interleaver 10i and 10j, respectively, for connection i and j, respectively, where mi, mj and the sum mi+mj are each smaller than or equal to $N_{u\_tx}$, which is the size of the bandwidth class specific IFFT of the terminal.

A1i/A1j denotes the input vector to the sub-carrier mappers 11i / 11j, which contain mi / mj symbols as its components. During the call set up phase for connection i / j, the terminal agrees with the access point on a common pseudo-random sequence to change the mapping of the mi data symbols of A1i / A1j onto mi / mj out of $N_{u\_tx}$ sub-carriers of IFFT. The AP makes sure that the sub-carriers assigned to different connections do not overlap in the same time slot (TS).

Like conventional OFDM systems, it is required that a small fractional of the total $N_{u\_tx}$ sub-carriers, which sit around the $N_{u\_tx}/2$-th coefficient of the IFFT and represent the highest-frequent sub-carriers in the OFDM symbol, are not used for any user connection. This is because the windowing function in the time domain results in an extension of the modulated signal spectrum and would introduce ICI, if this measure were not taken.

The multiplexing of variable rate connections is done in the sub-carrier mappers 11i / 11j by assigning the different connections i and j to different sub-carriers in the same time slots or to the same or different sub-carriers in different time slots, i.e. a TDMA scheme is used to obtain a multiplex of the connections i and j and multiple access.

An adder 19 adds the output vectors B1i and B1j for the different connections with respect to the used sub-carriers. The sum of B1i and B1j for all connections i and j undergoes an $N_{u\_tx}$-point IFFT in unit 12 to generate an OFDM symbol of maximum bandwidth $N_{u\_tx} f_\Delta$. Optionally, a pre-equalization can be executed between the connection adder 19 and the IFFT unit 12 by exploiting the downlink channel estimates because of the reciprocity of the TDD channel.

A guard period (GP) is inserted in a guard period insertion unit 13 after the IFFT by a fractional cyclic extension of the connection multiplexed OFDM symbol. To achieve a concurrent OFDM demodulation with a single FFT unit for different MTs of different bandwidths, the guard period is preferably the same for all MTs. The GP insertion is followed by a power-shaping filter 14 to limit the out-of-band transmission power, and by a conventional digital-analog-converter (DAC) 15 and a conventional RF front-end (RF transmission unit) 16, which are both optimized for bandwidth $N_{u\_tx} f_\Delta$.

After Lemmas 1 and 2 there will be an amplitude-scaling factor $L = N_{u\_rx}/ N_{u\_tx}$ between the inserted sub-carriers in the transmitter and the restored sub-carriers in the receiver due to the difference in FFT sampling rates. Yet, it is not necessary to have a separate block for this amplitude normalization, because through a closed-loop power control for each MT, enabled by a dedicated superframe which will be described below, this amplitude normalization will be automatically done.

It shall be noted for clarification that the channel encoder and interleavers 10i, 10j and the sub-carrier mappers 11i, 11j are generally also called OFDM coding means, and the OFDM coding means and the IFFT unit 12 are generally also called OFDM modulation means.

To illustrate signal flows in the above described scheme an output data sequence at channel encoder and interleaver 10i shall be assumed to be A(1), A(2), A(3), A(4), A(5), ..., where $A(k) = (a\_1(k), a\_2(k), ...a\_mi(k))^T$ is a vector with mi complex components. The real and the imaginary parts of each component $a\_1(k)$ represent the I- and Q-components of the channel encoded data symbol, respectively. The sequence A(k) is preferably stored in an output FIFO queue of the channel encoder and interleaver 10i, and will be read out by the sub-carrier mapper 11 i on demand.

For each output vector A1(k) of the channel encoder and interleaver 10i, the sub-carrier mapper 11j maps its m components $a1\_p(k)$, $p=1,..mi$, onto mi out of $N_{u\_tx}$ sub-carriers of the transmitter in the considered terminal obtaining B1(k). The DC sub-carrier and some highest-frequent sub-carriers with positive and negative sign may not be used. A possible mapping in sub-carrier mapper 11i for mi=10 is illustrated in Fig. 2.

Each so constructed output data symbol C1(k) is an OFDM symbol in the frequency domain. The $N_{u\_tx}$-point IFFT transformer 12 transforms the OFDM symbol in the frequency domain into an OFDM symbol in the time domain. The GP inserter 13 adds a cyclic prefix taken from the last $N_{u\_tx\_gp}$ samples of the time domain OFDM symbol or $N_{u\_tx\_gp}$

zero-valued samples to the time domain OFDM symbol. Fig. 3 illustrates the adding of a cyclic prefix to the time domain OFDM symbol.

The so constructed OFDM symbol with guard period undergoes a digital low-pass filtering for power shaping. This power-shaping LPF 14 may or may not be sampled at a higher sampling rate than the sampling rate of the time domain OFDM symbol.

General layout for uplink receiver

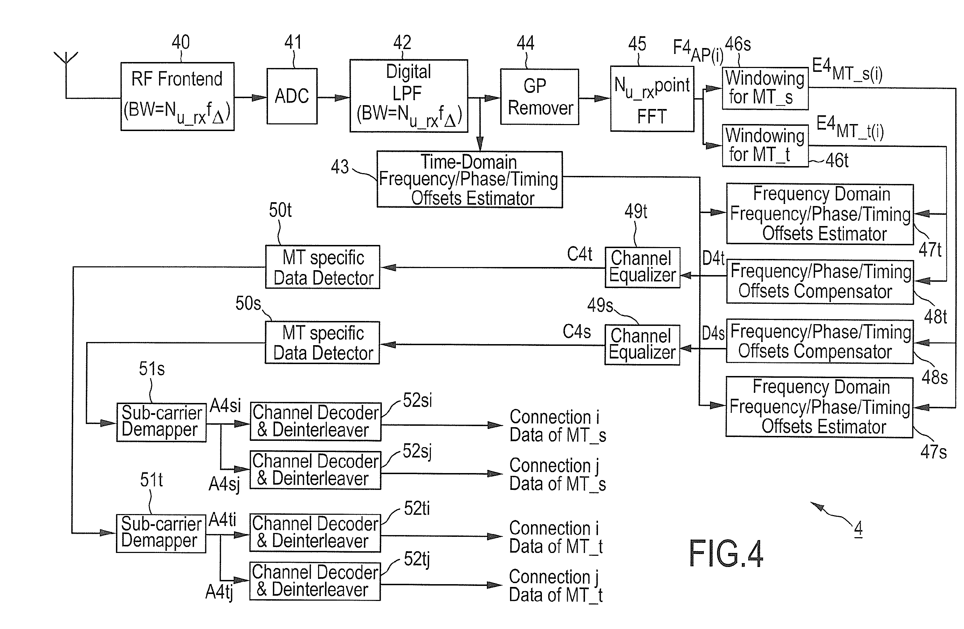

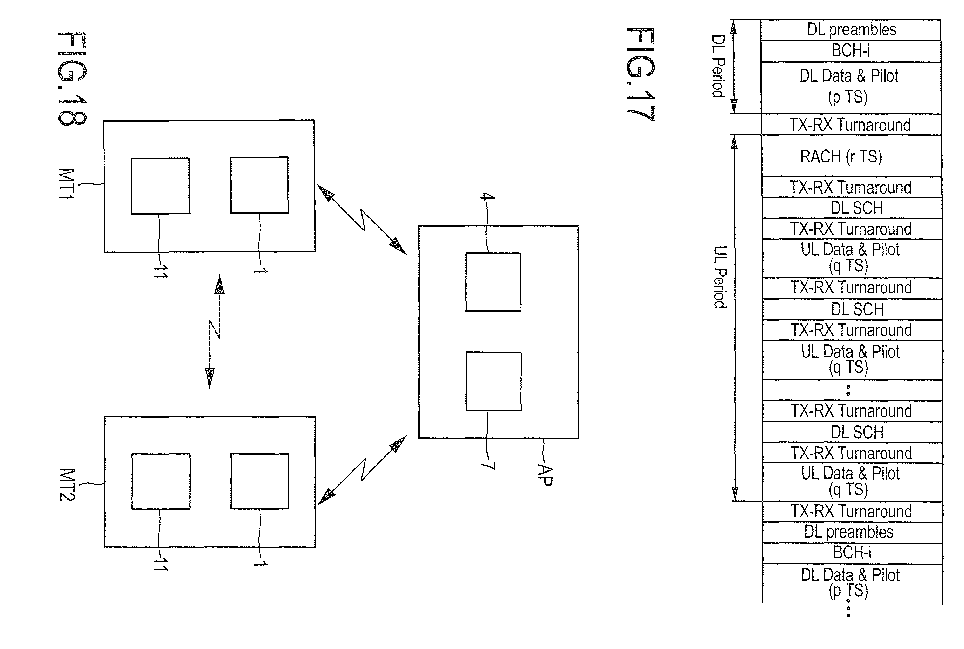

Fig. 4 shows a block diagram of a receiver architecture for uplink, i.e. the schematic layout of the uplink receiving unit 4 of an access point (AP) according to the present invention for use in an asymmetric OFDM communication system for the concurrent OFDM-demodulation with a single FFT unit of the maximum size $N_{u\_rx}$ for all MTs of different bandwidths $N_{u\_tx\_k} f_\Delta$. Thanks to the downlink synchronization sequence DL SCH preceding every q UL TS (see below Fig. 17), and the optional frequency, phase and timing offsets feedback from the AP, the OFDM signals from the different MTs arrive at the AP in quasi-synchronization.

A conventional RF front-end 40 and a conventional analog-digital converter (ADC) 41, which are dimensioned for the maximum bandwidth of $N_{u\_rx} f_\Delta$, receive the mixed RF signals from different MTs, and convert the signals to digital format.

The ADC 41 may do over-sampling to support the following digital low-pass filter (LPF) 42, whose edge frequency is dimensioned for the maximum bandwidth of $N_{u\_rx} f_\Delta$, rather than for the terminal specific bandwidth of $N_{u\_tx\_k} f_\Delta$. The digital LPF 42 in the time domain is common for all bandwidth classes. If the ADC 41 is doing over-sampling to support the digital LPF 42, the digital LPF will do the reverse down-sampling to restore the required common (maximum) receiver sampling rate of $N_{u\_rx} f_\Delta$.

Depending on the synchronization requirement, a MT may or may not send MT-specific preambles, which could be frequency-, code- or time-multiplexed with the preambles from other MTs. If at least one MT is sending preamble, e.g. in a superframe (described below), a time-domain frequency/phase/timing offsets estimator 43 performs the frequency, phase, and timing acquisition and tracking based on the special bit pattern in the preamble. The time-domain frequency/phase/timing offsets estimator 43 could be removed, if the quasi-synchronization enabled by the proposed combination of techniques is good enough for the required demodulation performance.

After time-domain frequency/phase/timing offsets estimator 43 the guard period is removed by a GP remover 44, and the remaining $N_{u\_rx}$ samples undergo a concurrent FFT with an $N_{u\_rx}$ point FFT unit 45. It should be noted that $N_{u\_rx}$ is the maximum FFT size that is supported by the system.

After said FFT, MT specific operations are carried out. Without loss of generality, only two MTs of different bandwidth classes with indices s and t are shown in Fig. 4. In the following MT_t is taken as an example to explain how the MT specific operations are performed. Firstly, the MT specific sub-carriers need to be extracted from the $N_{u\_rx}$ FFT coefficients, what is done in the windowing for MT_t unit 46t. Because the first $N_{u\_tx\_t}/2$ coefficients of an $N_{u\_rx}$-point FFT represent the $N_{u\_tx\_t}/2$ least-frequent sub-carriers with positive sign (including the DC) and the last $N_{u\_tx\_t}/2$ coefficients of an $N_{u\_rx}$-point FFT represent the $N_{u\_tx\_t}/2$ least-frequent sub-carriers with negative sign in the OFDM signal, the following FFT index mapping is done to extract $N_{u\_tx\_t}$ sub-carriers for MT_t out of the entire $N_{u\_rx}$ FFT coefficients (MT meaning terminal and AP meaning access point):

$$E4_{MT\_t}(i) = F4_{AP}(i), \qquad\qquad \text{if } 0 \le i \le N_{u\_tx\_t}/2 - 1$$

$$E4_{MT\_t}(i) = F4_{AP}(N_{u\_rx} - N_{u\_tx\_t} + i), \qquad \text{if } N_{u\_tx\_t}/2 \le i \le N_{u\_tx\_t}-1$$

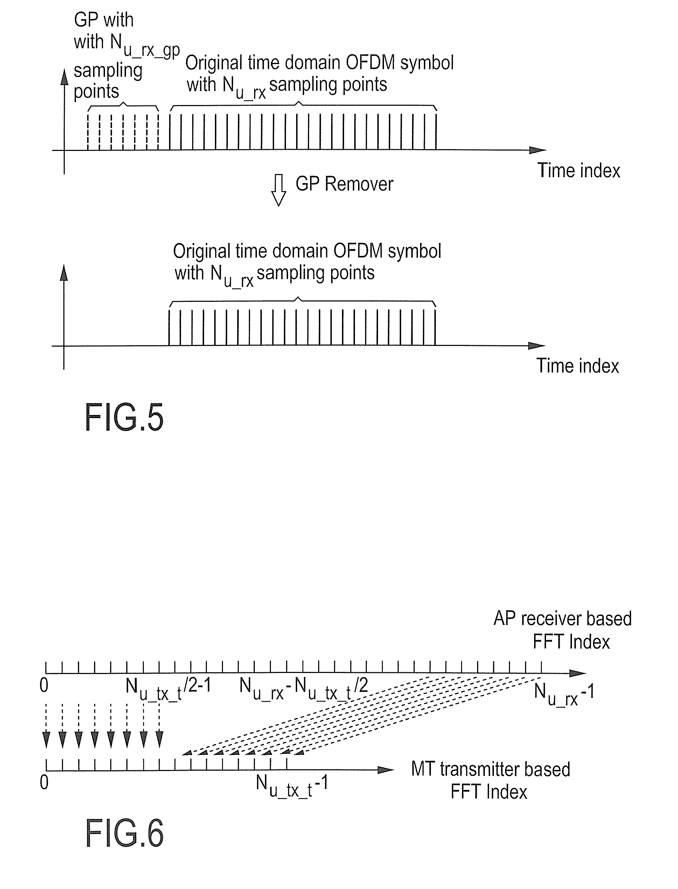

This mapping is illustrated in Fig. 6.

Above, $F4_{AP}(i)$ denotes the i-th FFT coefficient obtained in the access point after the $N_{u\_rx}$ point FFT, and $E4_{MT\_t}(i)$ denotes the i-th FFT coefficient that were generated in the terminal MT_t. With this mapping the complete $N_{u\_tx\_t}$ FFT coefficients generated in the MT_t are extracted and put in the right order, as if they were obtained by a conventional $N_{u\_tx\_t}$ point FFT. $E4_{MT\_t}$ contains the sub-carriers up to the bandwidth of the considered device MT_t disjunctively. During the connection set up, the AP makes sure that no more than one connection shares the same sub-carrier of the common FFT within the same TS.

However, in a practical system the power-shaping filter 14 (see Fig. 1) in the transmitter is not ideal. Usually, a (Root Raised Co-Sine) RRC or RC (Raised CoSine) filter is applied, which will extend the original OFDM spectrum of the used sub-carriers to adjacent bands, which will result in spreading of received useful signal energy to other sub-carriers than the first $N_{u\_tx}/2$ and last $N_{u\_tx}/2$ sub-carriers in Fig. 6. Therefore, in general, a windowing and mixing operation needs to be applied instead of the above simple windowing operation for the discussed ideal case.

Hence, the bandwidth class specific windowing & mixing unit 26 in a preferred embodiment selects K/2 first and K/2 last FFT coefficients out of the $N_{u\_rx}$ FFT coefficients $F_{AP}$ from the $N_{u\_rx}$-point FFT unit 25 in Fig. 4, where $N_{u\_tx\_t}$ $\leq K \leq N_{u\_rx}$. The i-th FFT coefficient $E4_{MT\_t}(i)$ of the transmitted OFDM symbol from the considered terminal is reconstructed by a linear or non-linear filter operation on these K FFT coefficients in the receiver. In general, this operation can be expressed as

$$E4_{MT\_t}(i) = \text{function} \left( F_{AP}(m), F_{AP}(n) \right),$$

for all m, n with $0 \leq m \leq K/2-1$, $N_{u\_rx}-K/2 \leq n \leq N_{u\_rx}-1$.

If MT-specific pilot tones are considered in the system, a terminal-specific frequency-domain frequency/phase/timing offsets estimator 47t is provided for executing another frequency/phase/timing offsets estimation in the frequency domain. The pilot tones of different MTs can be frequency-, code- or time-multiplexed. A MT may send preambles and/or pilot tones, or neither, depending on the performance requirement. A preamble may be constructed such that it also carries pilot tones for channel estimation and additional frequency/phase/timing tracking in the frequency domain. The frequency-domain frequency/phase/timing offsets estimator 47t also utilizes the results from the time-domain frequency/phase/timing offsets estimator 43 to increase the precision and confidence of the estimation. Further, a frequency/phase/timing offsets compensator 48t is provided which exploits the final frequency/phase/timing estimation results for the considered terminal MT_t to compensate for the offsets on the modulated sub-carriers in $E4_{MT\_t}(i)$. Furthermore, the access point may feed back the final frequency/phase/timing estimation results to the terminal MT_t via the control information conveyed in a downlink channel.

A terminal-specific channel equalization is executed in a channel equalizer 49t on the output vector D4t of the frequency/phase/timing offsets compensator 48t, because its result is more reliable on D4t, rather than $E4_{MT}(i)$, after the frequency/phase/timing offsets are cleaned up. The channel equalizer 49t delivers an output vector C4t, which contains all possible sub-carriers of the terminal MT_t.

Because these sub-carriers are still affected by noise and interferences, in general, a terminal-specific data detector 50t (e.g. MLSE) can be applied to statistically optimize the demodulation result for each used sub-carrier. The statistically optimized detection result is delivered to the sub-carrier demapper 51t, which reconstructs the mi data symbols (i.e. complex valued channel encoded symbols) as the components of A4ti for each connection i of the considered terminal MT_t. Finally, the data symbols are de-interleaved and channel-decoded in a channel decoder and deinterleaver 52ti to obtain the original upper layer data signal.

Multi-User-Detection (MUD) has been proposed in the literature to combat out-of-sync for conventional MC-CDMA systems. The improvement depends on the degree of out-of sync and other design parameters. MUD is very computing intensive, which is avoided in the here proposed scheme, because the intrinsic uplink synchronization requirement has been removed through the proposed combination of techniques, and, nonetheless, a number of mechanisms has been introduced to obtain a good quasi-synchronization for concurrent FFT. However, MUD can still be applied with the proposed scheme. One possibility is to apply MUD to the output vector $F4_{AP}(i)$ of the concurrent FFT. $F4_{AP}(i)$ contains the complete information from all MTs for MUD to exploit. Another possibility is to apply MUD to the channel equalization results C4t, C4s for all MTs. In this case a cross-MT MUD unit shall replace the MT-specific data detection units 50t, 50s in Fig. 4.

The reconstruction units 46t, 46s, the sub-carrier demappers 51t, 51s and the channel decoder and deinterleavers 52t, 52s are generally also called uplink OFDM restoration means, and the FFT unit 55 and the uplink OFDM restoration means are generally also called uplink OFDM demodulation means.

Next, signal flows in the above described scheme shall be explained. Because in the access point the receiver 40 has a higher bandwidth and the baseband a higher sampling rate than the transmitter in the terminal, the received time domain OFDM symbol with guard period will contain $N_{u\_rx}+N_{u\_rx\_gp}$ sampling points, with $N_{u\_rx}/N_{u\_tx} = N_{u\_rx\_gp}/N_{u\_tx\_gp} = 2^k$, in general. However, the absolute time duration of the time domain OFDM symbol and its guard period is the same as that generated by the transmitter in the terminal, because the receiver is sampled at a $2^k$ times higher rate.

The GP remover 44 removes the $N_{u\_rx\_gp}$ preceding samples from each time domain OFDM symbol with guard interval, as is illustrated in Fig. 5.

The $N_{u\_rx}$-point FFT transformer 45 transforms the time domain OFDM symbol without guard period to an OFDM symbol in the frequency domain. The original $N_{u\_tx}$ OFDM sub-carriers transmitted by the terminal are reconstructed by taking the first $N_{u\_tx}/2$ samples and the last $N_{u\_tx}/2$ samples out of the $N_{u\_rx}$ spectral coefficients of the $N_{u\_rx}$-point FFT, as is illustrated in Fig. 6, or by a more sophisticated frequency domain filtering operation.

The so re-constructed bandwidth class specific FFT window based OFDM symbol $F4_{AP(i)}$ undergoes first MT transmitter specific processing in frequency/phase/timing offset compensation, channel equalization and data detection. Then, considering only the path for MT t, the sub-carrier demapper 51t maps the m reconstructed data sub-carriers of each frequency domain OFDM symbol B4t(k) to mi and mj channel encoded data symbols a_1(k), a_2(k), ... a_mi(k) and a_1(k), a_2(k), ... a_mj(k) for further processing by the channel decoder and deinterleavers 52ti, 52tj.

General layout for downlink transmitter

Next, embodiments of the transmitter and receiver architecture for downlink shall be explained. Let the k-th bandwidth class of terminals be defined as the class of terminals, whose FFT/IFFT has only $N_{d\_rx\_k}=2^k$ coefficients, and whose baseband sampling rate is $N_{d\_rx\_k} f_\Delta$. Let the OFDM sampling rate in the access point be $N_{d\_tx} f_\Delta$, where $N_{d\_tx}$ is the size of the FFT engine for the OFDM modulation, then it holds for downlink L= $N_{d\_tx} N_{d\_rx\_k} \geq 1$.

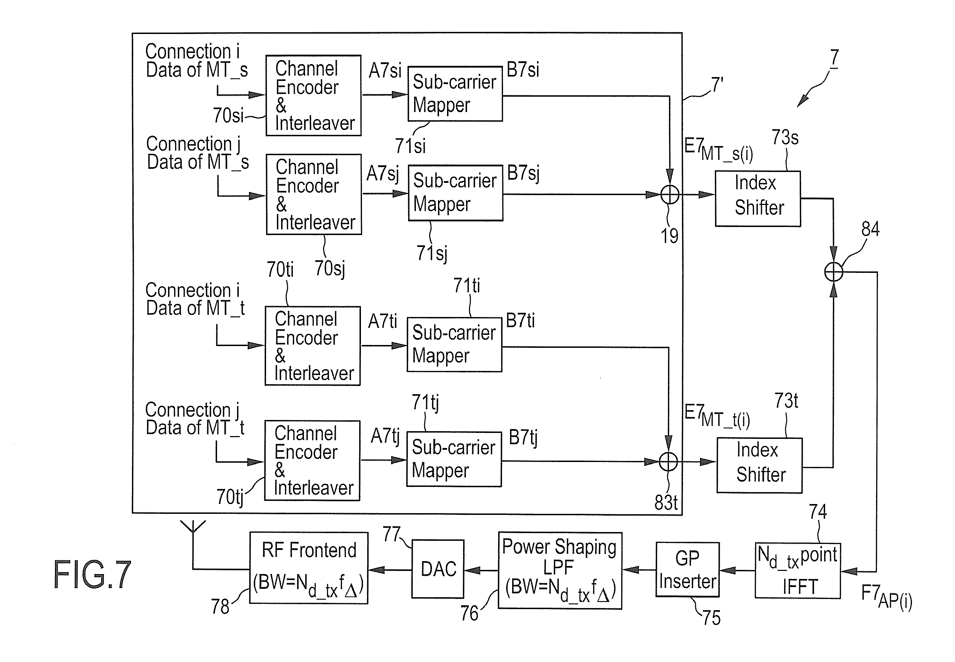

Fig. 7 shows a block diagram of a transmitter architecture for downlink, i.e. the schematic layout of the downlink transmission unit 7 of an access point according to the present invention for use in the asymmetric OFDM communication system, which resembles much the uplink transmitter block diagram shown in Fig. 1. The difference is that the AP has to instantiate one transmitter for each active MT in downlink, and different transmitters have different bandwidths. The technical challenge here is to do concurrent OFDM modulation for all receivers (i.e. MTs) of different bandwidths, if they are assigned the same time slot(s). Block 7' of Fig. 7 contains terminal (thus bandwidth)-specific operations only.

Without loss of generality, Fig. 7 only shows transmitter instantiations for two MTs, MT_s and MT_t, which are of different bandwidth classes s and t. Taking MT_t of bandwidth class t as an example, the sub-carrier mapper maps the mj incoming data symbols in A7tj from the channel encoder & interleaver 70tj onto maximum $\alpha N_{d\_rx\_t}$ sub-carriers, where $0<\alpha<1$ reflects the fact that a small fraction of the highest-frequent sub-carriers with both positive and negative signs should not be used to avoid ICI caused by the spectral extension due to time-domain windowing. The conventional FFT-coefficient indexing rule for an $N_{d\_rx\_t}$ point FFT is used for all MT specific operations in Fig. 7.

All MT specific operations up to the connection adders 83s, 83t in Fig. 7, i.e. the channel encoder & interleavers 70si, 70sj, 70ti, 70tj (generally called downlink symbol generation means) and the sub-carrier mappers 71si, 71sj, 71ti, 71tj, have the same descriptions as those for the uplink transmitter in Fig. 1. After all connections of MT_t are added, a vector $E7_{MT\_t}(i)$ containing $N_{d\_rx\_t}$ spectral coefficients is generated for each MT_t of bandwidth class t. An optional pre-equalization and/or low-pass filtering for power shaping can be applied to $E7_{MT\_t}(i)$ by exploiting the uplink channel estimate results. Before all $E7_{MT\_t}(i)$'s with bandwidth-specific sizes can be added together for the concurrent $N_{d\_tx}$ point IFFT, their indices need to re-ordered, in general, to meet the frequency correspondence in the enlarged FFT window. Therefore, the mapping process as shown in Fig. 6 has to be performed by the index shifters 73s, 73t, but in a reverse direction. After this mapping process, an $N_{d\_tx}$ dimensional FFT vector is generated for each MT_t, which only contains the first $N_{d\_rx\_t}/2$ and the last $N_{d\_rx\_t}/2$ non-zero spectral coefficients. The FFT coefficients sitting in-between are set to zero.

If more than one MT is from the same bandwidth class, the input vectors $E7_{MT\_t}(i)$ of the MTs of the same bandwidth class can be added first before the start of the FFT coefficient re-ordering process in the index shifters 73s, 73t. Optionally, a bandwidth class specific waveform-shaping operation could be applied to the sum of the input vectors $E7_{MT\_t}(i)$ of the same bandwidth class before the index shifters.

After the index shifters 73s, 73t, the enlarged FFT vectors for different MTs can be added by a second adder 84, and the sum undergoes a concurrent IFFT with a single IFFT unit 74 of the maximum size $N_{d\_tx}$. After this $N_{d\_tx}$ point IFFT, the conventional operations for OFDM symbols of $N_{d\_tx}$ points follow using a GP inserter 75, a LPF 76 and a DAC 77. Because the synchronization problem in downlink is less severe than in uplink, the guard period for downlink can be smaller than that for uplink.

Because the optional, bandwidth class specific waveform-shaping operation is carried out in the digital domain (on the sum of the $E7_{MT\_t}(i)$ vectors of the MTs of the same bandwidth class), the RF front-end 78 only needs a single analogue waveform-shaping filter, which is dimensioned for the maximum bandwidth that is supported by the system.

The channel encoder and interleavers 70 and the sub-carrier mappers 71 are generally also called downlink OFDM coding means, and the downlink OFDM coding means, the adders 83, the index shifters 73 and the IFFT unit 74 are generally also called downlink OFDM modulation means.

Similar to Fig. 1, to illustrate the signal flows in the scheme of Fig. 7, the output data sequence at the channel encoder and interleaver 70ti shall be assumed to be A(1), A(2), A(3), A(4), A(5), ..., where A(k)=(a_1(k), a_2(k), ...a_mi(k))$^T$ is a vector with mi complex components. The real and the imaginary parts of each component a_1(k) represent the I- and Q-components of the channel encoded data symbol, respectively. The sequence A(k) is preferably stored in an output FIFO queue of the channel encoder and interleaver 70ti, and will be read out by the sub-carrier mapper 71ti on demand.

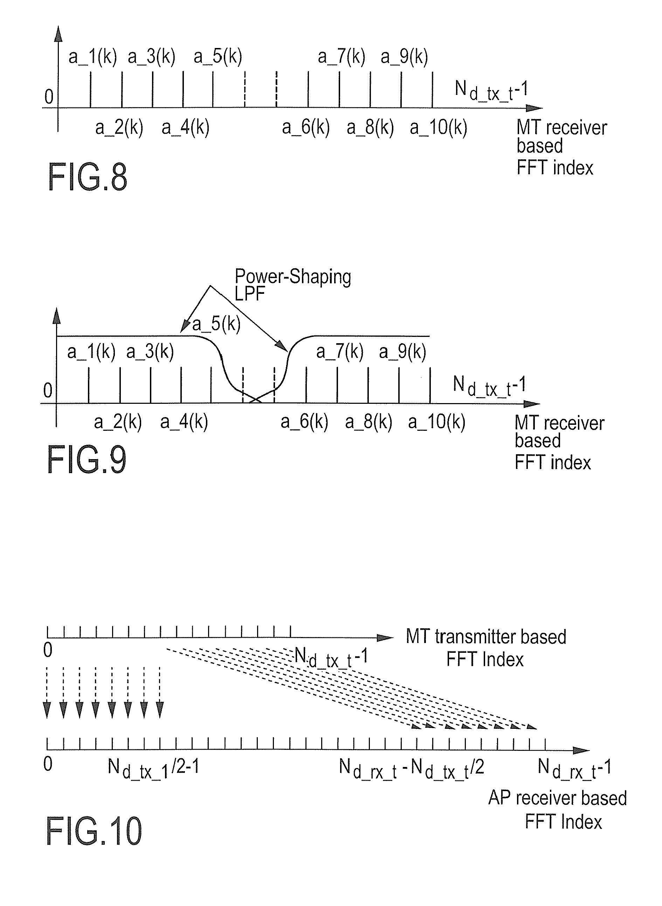

For each output vector A7(k) of the channel encoder and interleaver 70ti, the sub-carrier mapper 71ti maps its mi components $a_{7\_p}(k)$, p=1,..., mi, onto mi out of $N_{d\_rx}$ sub-carriers of the considered MT receiver to obtain B7(k). The DC sub-carrier and some highest-frequent sub-carriers with positive and negative sign may not be used. A possible mapping in sub-carrier mapper 71ti for mi=10 is illustrated in Fig. 8.

Each so constructed output data symbol is a frequency domain OFDM symbol B7(k) with respect to the FFT index that is based on the MT receiver under consideration. Because the spectrum of this bandwidth class specific OFDM symbol may be extended during the actual transmission, a preventive power-shaping LPF can be applied to gradually reduce the power at the edge of the OFDM symbol spectrum. A possible power-shaping LPF function is shown in Fig. 9.

After the power-shaping LPF and the adders 83t, 83s, the index shifters 73t, 73s re-maps the MT receiver based FFT indices $E7_{MT}$ onto the AP transmitter based FFT indices, whose FFT size $N_{d\_tx}$ is $2^k$ times larger than the FFT size $N_{d\_rx\_t}$ of the MT receiver. The re-mapping is done by assigning the first $N_{d\_rx\_t}/2$ sub-carriers of the MT receiver based FFT window to the first $N_{d\_rx\_t}/2$ indices of the AP transmitter based FFT window, and by assigning the last $N_{d\_rx\_t}/2$ sub-carriers of the MT receiver based FFT window to the last $N_{d\_rx\_t}/2$ indices of the AP transmitter based FFT window. This operation is illustrated in Fig. 10. Finally, an adder 84 adds the results of the index shifters 83t, 83s to obtain $F7_{AP}$.

General layout for downlink receiver

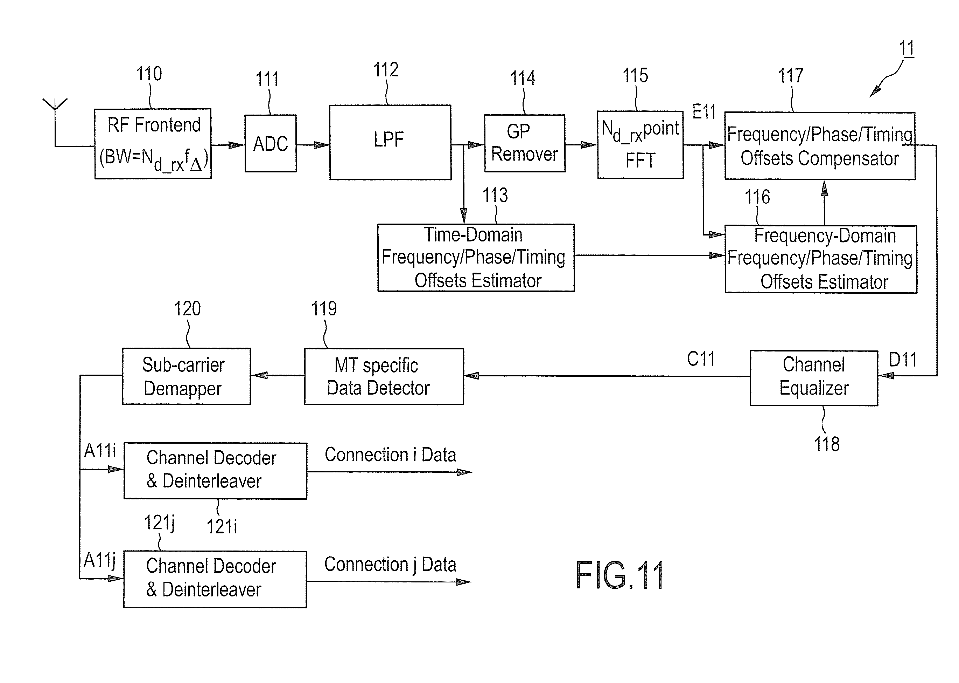

Fig. 11 shows a block diagram of a receiver architecture for downlink, i.e. the schematic layout of the downlink receiving unit 11 of a user terminal of a specific bandwidth class according to the present invention for use in the asymmetric OFDM communication system. It is assumed that more than one MT is assigned the same time slot(s) under discussion.

A conventional RF front-end 110 and a conventional ADC 111, and a conventional digital low-pass filter 112, which are dimensioned for the terminal-specific bandwidth of $N_{d\_rx} f_\Delta$ receive the mixed RF OFDM signals from the access point, convert the signals to digital format and filter out the out-of-band unwanted signals. The digital signal after the digital LPF 112 only contains the channel encoded symbols of the smallest bandwidth up to the bandwidth $N_{d\_rx} f_\Delta$, which is the bandwidth of the considered terminal. The AP may or may not send common preambles for all MTs, or MT-specific preambles that could be code-, frequency, or time-multiplexed with the preambles for the other MTs. If a preamble is sent to the terminal under consideration, a time-domain frequency/phase/timing offsets estimator 113 performs the frequency, phase, and timing acquisition and tracking based on a special bit pattern in the DL preamble. After the time-domain frequency/phase/timing offsets estimator 113 the guard period is removed in a GP remover 114, and the remaining $N_{d\_rx}$ samples undergo a conventional $N_{d\_rx}$ point FFT in an FFT unit 115. The output vector E11 (the frequency domain OFDM signal) of the $N_{d\_rx}$ point FFT unit 115 contains the sub-carriers up to the bandwidth of the considered terminal.

If the access point sends common or terminal-specific pilot tones, a frequency-domain frequency/phase/timing offsets estimator 116 can execute another frequency/phase/timing offsets estimation in the frequency domain. The pilot tones for different MTs can be frequency, code- or time-multiplexed. The AP may send preambles and/or pilot tones, or neither, depending on the performance requirement. A preamble may be constructed such that it also carries pilot tones for channel estimation and additional frequency/phase/timing tracking in the frequency domain. The frequency-domain frequency/phase/timing offsets estimator 116 also utilizes the results from the time-domain frequency/phase/timing offsets estimator 113 to increase the precision and confidence of the estimation. A frequency/phase/timing offsets compensator 117 exploits the final frequency/phase/timing estimation results for the considered terminal to compensate for the offsets on the modulated sub-carriers in the frequency domain OFDM signal E11.

Thereafter, channel equalization is executed on the output vector D11 of the frequency/phase/timing offsets compensator 117 in a channel equalizer 118, because its result is more reliable on D11, rather than on E11, after the frequency/phase/timing offsets are cleaned up. The channel equalizer 118 delivers its output vector C11, which contains the indices of all sub-carriers of all used sub-carriers of the MT. Because the latter are still affected by noise and interferences, in general, a MT-specific data detector 119 (e.g. MLSE) can be applied to statistically optimize the demodulation result for each connection on a used sub-carrier. The statistically optimized detection results are delivered to the sub-carrier demapper, which reconstructs the m_i data symbols as the components of A11i for each connection i of the MT. Finally, the channel encoded symbols A11i, A11j are de-interleaved and channel-decoded in a channel decoder and deinterleaver 121 to obtain the original upper layer data.

The sub-carrier demapper 120 and the channel decoder and deinterleavers 121 i, 121j are generally also called downlink OFDM decoding means, and the FFT unit 115 and the OFDM decoding means are generally also called downlink OFDM demodulation means.

The MT receiver is a conventional OFDM receiver. After the ADC 111, which may be clocked at a rate higher than $BW=N_{d\_rx} f_\Delta$, a digital low-pass filtering 112 is executed. If the ADC 111 is over-sampling, the digital LPF 112 is also followed by a down-sampling to the required bandwidth $N_{d\_rx} f_\Delta$.

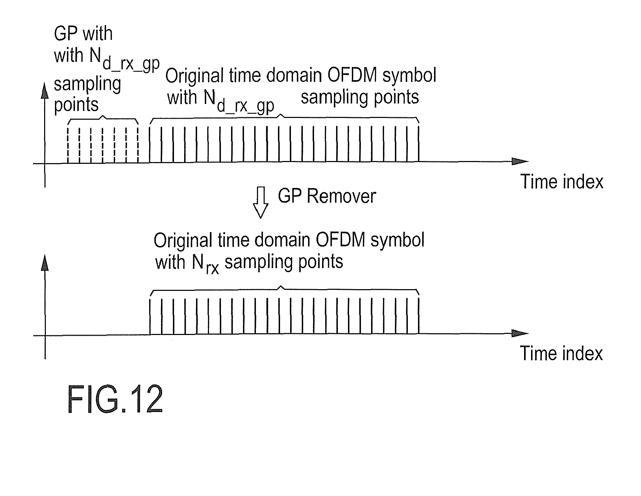

The GP remover 54 removes the $N_{d\_rx\_gp}$ preceding samples from each time domain OFDM symbol with guard period, as is illustrated in Fig. 12.

The $N_{d\_rx}$-point FFT transformer 115 transforms the time domain OFDM symbol without guard period to an OFDM symbol in the frequency domain. After frequency/phase/timing offset compensation, channel equalization and data detection, the sub-carrier demapper 120 maps the m reconstructed used sub-carriers of each frequency domain OFDM symbol C11(k) to mi and mj channel encoded data symbols a_1(k), a_2(k), ... a_m(k) and a_1(k), a_2(k), ... a_mj(k) for further processing by the channel decoder and deinterleavers 121i, 121j.

In the following, additional background information and further embodiments of the general communication system according to the present invention as described in detail above shall be explained.

Preamble design

First, an embodiment using preambles in the downlink transmission from the AP to a MT belonging to a specific bandwidth class, and/or in the uplink transmission from a MT belonging to a specific bandwidth class to the AP shall be explained.

It is well know that OFDM systems require preambles to enable frequency/clock, phase, and timing synchronization between the transmitter and receiver, which is very crucial for goodperformance. The processing of preambles takes place in the time-domain frequency/phase/timing offsets estimator and/or in the frequency-domain frequency/phase/timing offsets estimator of uplink and downlink receiver. There are many different methods to exploit preambles for various types of synchronization.

Because the AP has to support MTs of different bandwidths in the above described bandwidth asymmetric OFDM system according to the present invention, a straightforward application of the conventional preamble design paradigm may lead to independent generation and processing of preambles for different bandwidth classes. This would mean an increased amount of system control data, which are overhead, and more baseband processing. In the following a harmonized preamble design approach will be explained by which these disadvantages can be avoided.

The AP in the proposed bandwidth asymmetric OFDM system supports MTs of different bandwidths. Let the k-th bandwidth class of MTs be defined as the class of MTs, whose FFT/IFFT has only $2^k$ coefficients, and whose FFT/IFFT sampling rate is $2^k f_\Delta$, where $f_\Delta$ is sub-carrier spacing, which is set equal for both the AP and MT. Without loss of generality, the FFT/IFFT sampling rate of the AP is equal to that of the MTs belonging to the highest bandwidth class.

After the Parseval's Theorem

$$\int_{-\infty}^{\infty} s_1(t) s_2(t) dt = \int_{-\infty}^{\infty} S_1(f) S_2^*(f) df$$

an OFDM preamble with good autocorrelation property in the frequency domain will also have good autocorrelation property in the time domain. This is the reason why the preambles for the IEEE802.11a system are based on short and long synchronization sequences with good autocorrelation property in the frequency domain, although the synchronization operation itself is done in the time-domain in most practical implementations.

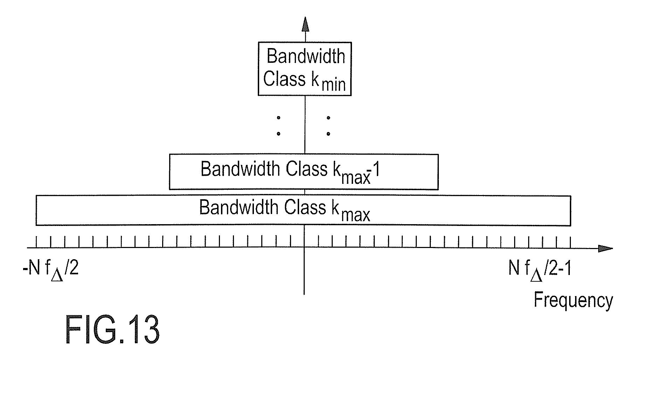

Let the size of the FFT unit in the AP be $N=2^{kmax}$. These N spectral coefficients represent physically a (periodic) spectrum from $N f_\Delta/2$ to $N f_\Delta/2 -1$. The MTs of the different bandwidth classes use differently the FFT coefficients over this entire spectrum. Fig. 13 illustrates how the different bandwidth classes share the different spectral coefficients. The lower frequent the spectral coefficients are, the more bandwidth classes are using them.

Because MTs of different bandwidths are sharing sub-carriers within their overlapping spectrum, there is now a possibility to design a single M-point long preamble sequence Pr(i) to be shared by the MTs of different bandwidths, where M≤N. In general, the following requirement shall be met by this common preamble sequence:

1. Each of the M chips of Pr(i), i=0,..M-1, shall be assigned to one unique sub-carrier. The M chips shall be distributed such that if the k-th bandwidth class with $2^k$ sub-carriers contain p chips of Pr(i), the k+1-th bandwidth class with $2^{k+1}$ sub-carriers shall contain 2p chips of Pr(i).

2. For the minimum bandwidth class to be considered, which contains $N_{min}=2^{kmin}$ lowest-frequent FFT coefficients, the chips of Pr(i) falling in the bandwidth of the minimum bandwidth class shall have good auto-correlation property. This implies that there are enough chips, say >4, falling into the minimum bandwidth class.

3. For two bandwidth classes $k_1$ and $k_2$, which contain $2^{k1}$ and $2^{k2}$ FFT coefficients, respectively, and $k_1>k_2>k_{min}$, the autocorrelation property of the chips of Pr(i), which fall into the $k_1$-th bandwidth class shall be equal or better than the autocorrelation property of the chips, which fall into the $k_2$-th bandwidth class. This is because the $k_1$-th bandwidth class contains more chips of Pr(i) than the $k_2$-th bandwidth class.

4. The chips of any two different preambles $Pr_1(i)$ and $Pr_2(i)$, which fall into the same bandwidth class shall be orthogonal to each other.

Following this design requirement, and assuming that the lowest bandwidth class will contain enough FFT coefficients, say $N_{min}$=16, it is proposed to use the orthogonal Gold codes as common preambles for the bandwidth asymmetric OFDM system. Such orthogonal Gold codes are, for instance, described in the book "OFDM and MC-CDMA for Broadband Multi-User Communications, WLANs and Broadcasting" by L. Hanzo, M. Muenster, B.J. Choi, T. Keller, John Wiley & Sons, June 2004. This is because the Gold codes have good autocorrelation and cross-correlation properties for any given length, as compared to other codes. However, the following design technique can also be applied to any other codes, such as m-sequence, etc.

Each Gold code of length $M=2^m$ shall represent a unique M-point common preamble, where $M \leq N$, in general. Let the number of the different bandwidth classes be $Q=2^q$, $q<m$, and $k_{min}$ be the index for the minimum bandwidth class. Starting with the minimum bandwidth class the following successive design rule applies.

The minimum bandwidth class shall contain the first $M_{kmin}=M/Q$ chips of the Gold code. These $M_{kmin}$ chips may or may not be equidistantly assigned to the $N_{min}=2^{kmin}$ sub-carriers of the minimum bandwidth class. This can be determined by the individual system design.

Suppose $M_k$ chips are assigned to the k-th bandwidth class, the k+1-th bandwidth class shall contain the first $2M_k$ chips of the Gold code. The first half of these $2M_k$ chips is the same as the chips for the k-th bandwidth class. That means the k-th bandwidth class decides their assignment to sub-carriers. The second half of these $2M_k$ chips are assigned to the sub-carriers which fall into the frequency of the k+1-th bandwidth class, but do not fall into the frequency of the k-th bandwidth class. Again, the positions of the sub-carriers the 2nd half of these $2M_k$ chips are assigned to are free to choose.

At the receiver in a MT of the k-th bandwidth class, the received time domain OFDM symbols (i.e. before the bandwidth class specific FFT) are only made of the first $2^k$ lowest frequent sub-carriers that are sent by the AP, because the RF front-end of the MT will filter out all other sub-carriers. Therefore, for the detection of the preamble, the MT only needs to correlate, in the time domain, the receiver OFDM symbols with the IFFT transformed version of the Gold code section, whose $M_k$ chips are assigned to $M_k$ freely chosen sub-carriers within the k-th bandwidth.

If on these $M_k$ chosen sub-carriers no other data are multiplexed, the MT can immediately use these $M_k$ sub-carriers (i.e. after the bandwidth specific FFT) as pilot tones to estimate the transfer function between the AP and the MT, because these sub-carriers are just modulated with the know sample values at the first $M_k$ chips of the Gold code.

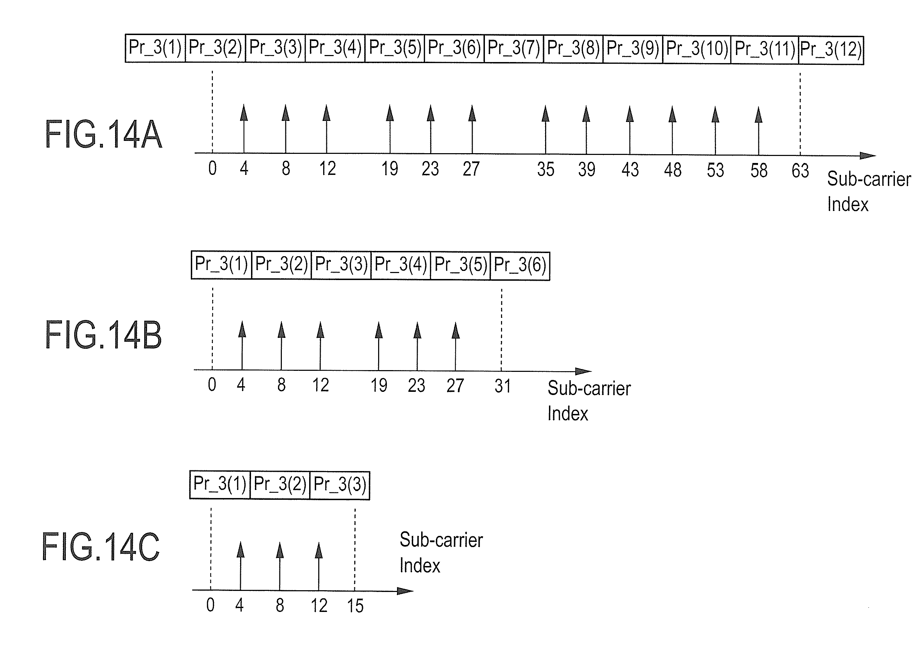

As an example, 3 different bandwidth classes are assumed. The largest bandwidth class has 64 FFT coefficients, the second largest one 32 FFT coefficients, and the smallest bandwidth class has 16 FFT coefficients. That means $k_{max}$=6, $k_{min}$=4. The Gold sequence for the largest bandwidth class has 12 samples Pr_6(i), i=1,..,12. Fig. 14 shows how starting from this Gold sequence for the largest bandwidth class and its assignment to 12 selected sub-carriers 4, 8, 12, 19, 23, 27, 35, 39, 43, 48, 53, 58. The preamble sequences for other bandwidth classes and their assignment to sub-carriers are determined according the above design rules. Fig. 14A shows the preamble Pr_6(i) for the largest bandwidth class and a possible assignment to 12 sub-carriers, Fig. 14B shows the preamble Pr_5(i) for the second largest bandwidth class and the derived assignment to 6 sub-carriers, Fig. 14C shows the preamble Pr_4(i) for the smallest bandwidth class and the derived assignment to 3 sub-carriers.

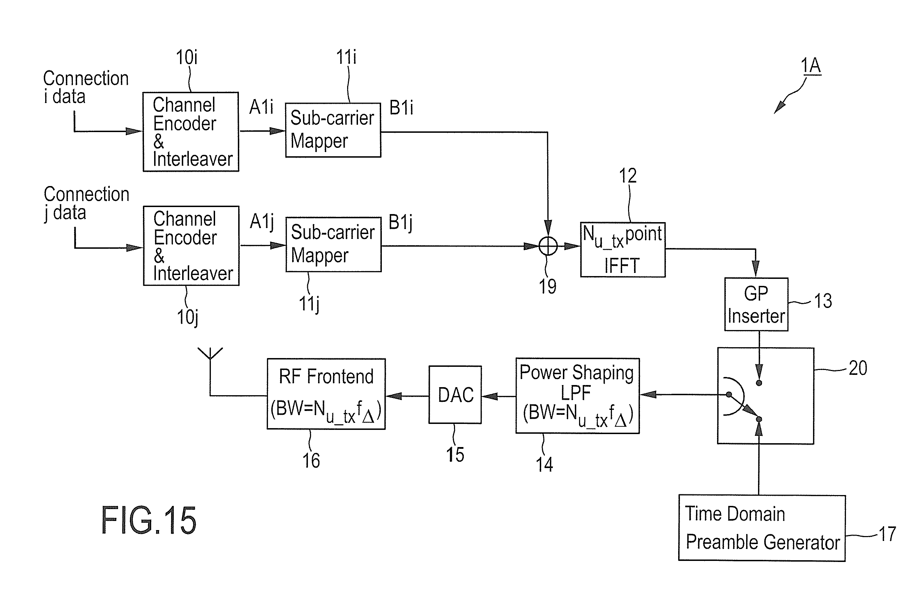

Fig. 15 shows a layout of the uplink transmitter 1A with means for preamble insertion, which is based on the layout shown in Fig. 1. The switch 20 determines if a preamble sequence or an OFDM user data block will be transmitted in uplink by the MT. The time domain preamble generator 17 may generate the preamble directly in the time domain, or first generate a temporary preamble in the frequency domain according to a design rule, and then transform this temporary preamble to the final time domain preamble through a $N_{u\_tx}$ point IFFT. The time domain preamble is preferably stored in a memory (not shown). When the switch 20 is in the upper position, the time domain preamble is read out at the right clock rate, and the transmission of the OFDM user data block is suspended.

At the uplink receiver (as generally shown in Fig. 4), the preamble sequence will be exploited by the time-domain frequency/phase/timing offsets estimator 43 and/or frequency-domain frequency/phase/timing offsets estimators 47s, 47t. If only the time-domain frequency/phase/timing offsets estimator 43 will exploit the preamble sequence, only the RF front-end 40, ADC 41, digital LPF 42 and time-domain frequency/phase/timing offsets estimator 43 of the uplink receiver 4 shown in Fig. 4 will process the preamble sequence. If also the frequency-domain frequency/phase/timing offsets estimators 47s, 47t will exploit the preamble sequence, the common $N_{u\_rx}$ point FFT unit 45, windowing & mixing units 46s, 46t, and frequency-domain frequency/phase/timing offsets estimator 47s, 47t of the uplink receiver 4 will process the preamble sequence, too. The GP remover 44 may be disabled, depending on the actual design of the preamble.

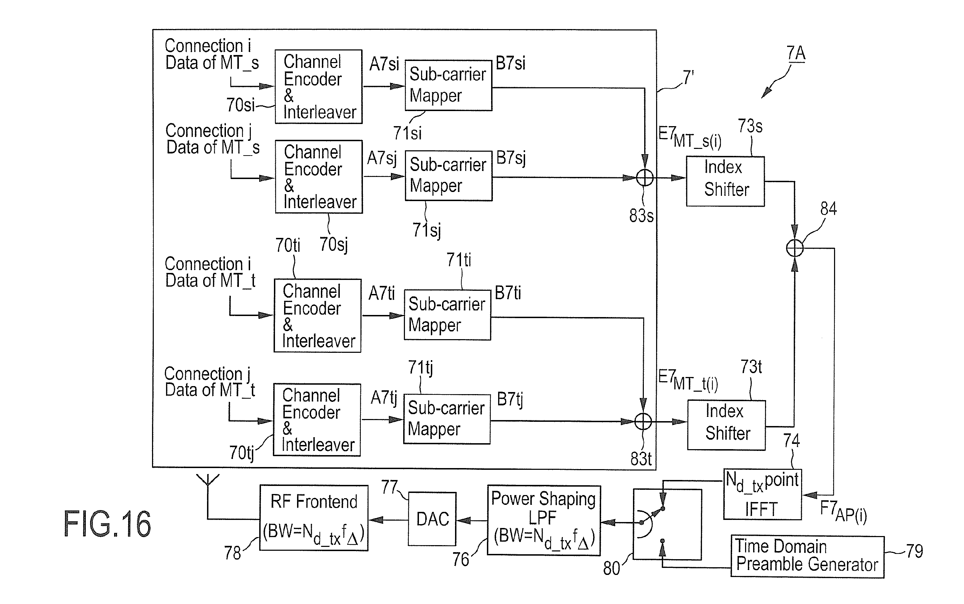

Fig. 16 shows a layout of the downlink transmitter 7A with means for preamble insertion which is based on the layout shown in Fig. 7. The switch 80 determines if the AP will transmit a preamble sequence or an OFDM user data block in downlink. The time domain preamble generator 79 may generate the preamble directly in the time domain, or first generate a temporary preamble in the frequency domain according to a design rule for the conventional FFT index numbering system of the bandwidth class under consideration. Then, the temporary preamble needs to be index-shifted to the FFT index numbering system of the common FFT unit, and finally transformed to the time domain preamble through the common $N_{d\_tx}$ point IFFT for all bandwidth classes. The time domain preamble is preferably stored in a memory. When the switch is in the lower position, the time domain preamble is read out at the right clock rate, and the transmission of the OFDM user data block is suspended.

At the downlink receiver (as generally shown in Fig. 11), the preamble sequence will be exploited by the time-domain frequency/phase/timing offsets estimator 113 and/or frequency-domain frequency/phase/timing offsets estimator 116. If only the time-domain frequency/phase/timing offsets estimator 113 will exploit the preamble sequence, only the RF front-end 110, ADC 111, digital LPF 112 and time-domain frequency/phase/timing offsets estimator 113 in the downlink receiver 11 shown in Fig. 11 will process the preamble sequence. If also the frequency-domain frequency/ phase/timing offsets estimator 116 will exploit the preamble sequence, the $N_{d\_rx}$ point FFT unit 115, and frequency-domain frequency/phase/timing offsets estimator 116 will process the preamble sequence, too. The GP remover 114 may be disabled, depending on the actual design of the preamble.

The above proposal to send or receive preambles by the AP regularly or on demand to/from the different MTs supplements the communication system proposed according to the present invention. It makes the cost, size, and power consumption of the MT scalable, hence covers a much larger area of potential applications than any single known wireless system.

Frame structure

For the proposed bandwidth asymmetric OFDM system a superframe structure as shown in Fig. 17 is preferably used.

The superframe comprises a downlink (DL) period and an uplink (UL) period, separated in-between by TX-RX turnaround time needed to switch the RF front-end from transmitter to receiver mode, and verse vice. Except Broadcast Channel (BCH), the basic TDMA unit for DL/UL channels is time slot (TS). Each TS is made of Q OFDM symbols, and may last between 0.5 ms to 2ms. The DL period starts with a group of DL preambles, which are made of $N_s$ identical short preambles followed by $N_1$ identical long preambles. Each short and long preamble shall contain a sufficiently large number of sub-carriers within the frequency band of each bandwidth class. A short preamble is a time-domain shortened version of a root preamble P1, and a long preamble is a time domain extended version of a root preamble P2. A possible design for the root preambles P1 and P2 for the new bandwidth asymmetric OFDM system has been described above. Beyond frequency/clock, phase and timing synchronization, the long preambles can also be used for DL channel estimation. The AP may have different groups of DL preambles. Each group of DL preambles may be associated with the set of sub-carriers that are used by the following Broadcast Channels (BCH-i). BCH-i is sent before BCHJ_j, if i<j. After a MT has matched to a group of DL preambles, it is able to decode at least one of the following BCH-i, which uses sub-carriers within its bandwidth class i.

The length of BCH-i is the first information element to be sent in BCH-i. Since BCH-i can be very short, its length is expressed in number of OFDM symbols, rather than number of TS. BCH-i is made of sub-carriers that belong to the i-th bandwidth class, but not belong to the (i-1)-th bandwidth class. After the above described definition, the (i-1)-th bandwidth class has a smaller bandwidth than the i-th bandwidth class. This has the consequence that the information elements sent over BCH-i must only be relevant to MTs of the i-th bandwidth class, or MTs of a higher bandwidth class. The last information element sent over BCH-i is a flag, which indicates if a new broadcast channel BCH-(i+1) will follow the current broadcast channel BCH-i. If the flag is set to zero, BCH-i is the last broadcast channel for the current DL period.

A MT of the i-th bandwidth class shall decode all available BCH-k, up to BCH-i, i.e. k=1, ..i. After the last relevant BCH-k is decoded, the MT shall know the length of the DL period, and the length of the UL period (in TS). It shall also know where its random access channel (RACH) starts and ends. The total length of RACH, again in TS, is either fixed or adjustable via broadcast in BCH-i. However, the AP can confine a MT to accessing only a portion of the total r RACH time slots. Therefore, the following information element

RACH_Info: MT_ID, Start_TS, Length

is broadcast in one of the possible BCH-k, k=1,..i. It signals that the MT with the identifier MT_ID shall only access RACH time slots from Start_TS to Start_TS+Length-1. The first of the r total RACH time slots is numbered zero.

The AP can also use BCH-k, k=1,..i, to assign resource to an established dedicated channel (DCH), which can be used either for control or data purposes, for a MT belonging to the i-th bandwidth class. The responsible information element has the following format

DCH_Info: MT_ID, CH1_ID, Start_TS-1, Length_1 , CH2-ID, Star_TS_2, Length_2, ..

With this information element, the AP signals that the MT with identifier MT_ID is assigned time slots from Start_TS_1 to Start_TS_1+Length_1-1 for its first DCH with identifier CH1_ID, and assigned time slots from Start_TS_2 to Start_TS_2+Length_2-1 for its second DCH with identifier CH2_ID, and so on. CHx_ID=NULL indicates that the resource assignment is now ended for the considered MT. If DCH is a downlink connection, the TS numbering starts with the first TS after the last BCH. If DCH is an uplink connection, the TS numbering starts with the first TS after RACH. DL SCH and TX-RX Turnaround are not considered in the TS numbering for resource allocation.

The AP may assign the same TS slot(s) to different DCHs of the same MT or of the different MTs. In this case, it shall ensure that these different connections are using different sub-carriers within the same TS. For example, it is possible that the sub-carriers with indices from 0 to 31 as related to the common FFT in the AP are assigned to a DCH of a MT belonging to bandwidth class 6, and the sub-carriers with indices from 32 to 63 are assigned to a DCH of a MT belonging to bandwidth class 7.

Because connections from different MTs may be assigned the same time slot(s), it is necessary that the new frame structure also provides a mechanism to ensure that the OFDM symbols from these different MTs arrive at the AP in quasi synchronization to enable concurrent OFDM demodulation with a common FFT engine as being discussed above. This is done, as shown in Fig. 17, by dividing the UL period (after RACH) into equal data & pilot channel segments of q time slots each. Each data & pilot channel segment is preceded by downlink synchronization sequence DL SCH with a TX-RX turnaround time before and after it. The DL SCH is used for the MTs to do frequency/clock, phase, and timing adjustment for the following p TS. After the MT receiver has re-synchronized to the DL SCH, the transmitter in the MT shall be locked to the frequency and phase of the MT receiver after the operation has been switched from the receiver mode to the transmitter mode in the MT. This can be done via an internal PLL, which is locked to the frequency and phase of the DL SCH sequence and keeps running based on the last frequency/phase information obtained from the DL SCH in the transmitter mode (i.e. in the absence of DL SCH). The DL SCH sequence can be made identically to the whole or a sub-set of the DL preambles. It should contain a sufficient large number of sub-carriers in each bandwidth class for offering good auto-correlation property for each bandwidth class.

Optionally, the AP can also instruct a MT to correct the frequency/clock, phase, timing of its uplink OFDM symbols, after the AP has estimated the frequency, phase and timing deviations of the uplink OFDM symbols from the references in the AP based on the uplink pilot tones from this MT.

As an additional option the uplink synchronization can be supported by a dedicated narrow band downlink channel, which is assigned a band outside the band of any bandwidth class of the data communications. Over this narrow band downlink channel the AP transmits regularly or continuously a time reference signal, which all MTs are receiving by means of a dedicated receiver means, even when they are transmitting data to the AP. Using the reference signal received from this dedicated narrow band downlink channel, the MTs adjust their clocks and frequency and phase to that of the AP for the data communications, especially for the uplink synchronization of the data communications between the different MTs.

Procedures

For the proposed bandwidth asymmetric OFDM systems to operate as designed new procedures have been developed for the different stages of the operation.

Network identification and synchronization

For the TDMA based system concept a multi-network environment is created by letting the AP of each network to operate in a unique frequency band, which does not overlap with the bands of the other networks. In this case the network is uniquely identified by the central carrier frequency.

The MT does the following procedure for network identification and synchronization. It scans all possible frequency bands and measures the reception quality of DL preambles at each central frequency. Then, it selects the frequency with the best DL preambles reception quality and synchronizes to this group of DL preambles. Because there is a one-to-one correspondence between the DL preambles group ID and the used scrambling code(s) for different broadcast channels BCH-i, the MT can start to decode the contents in BCH-i after being synchronized to the best DL preambles group. The used sub-carriers and their coding/modulation mode are pre-defined for each BCH-i.

Network association and dissociation

From CCCH-i the MT will learn all the necessary system parameters to start the association with the network. One important parameter is the access parameters of the random access channel (RACH-i). The RACH-i channel start position and length (in TS) is broadcast in BCH-i, and all possible sub-carriers within the bandwidth class are used for RACH-i.

After the network association request is received via RACH-i, the AP can establish a dedicated control channel for both uplink and downlink for the MT. The dedicated control channel is established by informing the MT of its identifier. To make the TDMA system more spectral efficient, the AP should only permanently assign the connection ID to the MT, but not the actual used radio resource, i.e. sub-carriers + TS. If the MT wants to dissociate with the network, it just sends a dissociation request to the AP via either RACH-i or the existing dedicated uplink control channel. The AP can initiate dissociation for the MT.

Connection set up and release

If a MT initiates a connection set up, it shall send the request either via RACH-i or the existing dedicated uplink control channel. As mentioned before, for TDMA the AP need first grand radio resource to the dedicated uplink control channel, which will be discussed below. Upon reception of the connection setup request, the AP will either inform the MT of the identifier of the new connection in the TDMA system or reject the request due to overload of the system.

If the AP initiate a connection set up, it shall send notify the MT of the request either via the common DL broadcast channel (i.e. BCH-i), or via the dedicated downlink control channel between the AP and the MT. The MT may accept or reject the request.

Either the MT or AP can initiate a connection release via the same control channel as that for the set up request. The consequence of that is that all resources for that connection are freed afterwards.

Resource request and grand/modify

The MT can use RACH or the dedicated uplink control channel to request resource for an established uplink user connection. However, also the resource for the dedicated uplink control channel should be granted dynamically. One conventional way to do this is polling. Here, the AP grant the MT the resource to the dedicated control channel from time to time to give him the opportunity to send its control message. There are other more efficient techniques, such as piggy-back, to grant resource to the dedicated control channel, which will be discussed here. The resource scheduler in the AP will collect all uplink resource requests and optimizes the resource grants for a given period of the next transmission, which can be just one PHY/MAC frame or very long. It may also modify the resource already granted to a MT for long term. The grant message is sent either in the common broadcast channel, or in the dedicated downlink control channel. For the downlink channels, the AP just sends the grant/modify message to the MT for an established downlink user connection without explicit request. The grant/modify message is sent in the same control channel as that for the uplink channel grand/modify messages.

Fig. 18 shows a simple block diagram of a communications system in which the present invention can be used. Fig. 18 shows particularly an access point AP having an uplink receiving unit 4 and a downlink transmission unit 7 and two terminals MT1, MT2 comprising an uplink transmission unit 1 and a downlink receiving unit 11. Such a communications system could, for instance, be a telecommunications system, in which the access point AP represents one of a plurality of base stations and in which the terminals MT1, MT2 represent mobile stations or other mobile devices. However, the communications system could also of any other type and/or for any other purpose.

Summary

With this new system design, in principle, the requirement that the OFDM symbols from different MTs have to arrive at the AP in synchronization has been removed. This is enabled by use of the TDMA technique as multiple access technique to obtain a bandwidth asymmetric OFDM communication system. Thus, according to the present invention the OFDM signal of different connections are assigned to different sub-carriers in the same time slots or to the same or different sub-carriers in different time slots to enable connection multiplex and multiple access.

As mentioned above, uplink synchronization of OFDM symbols from different MTs at the AP is made no longer an intrinsic requirement by the new system design. However, if the OFDM symbols from different MTs are too much out of sync, a concurrent FFT is not possible, which would increase the receiver complexity significantly. Therefore, a dedicated superframe structure is optionally proposed to support the AP to estimate the frequency/clock and timing offsets for different MTs and to feed back these estimates to the MTs, letting them adjust the frequency/clock and timing. In doing so, a quasi-synchronization of the OFDM arrival times for different MTs is obtained. The remaining small offsets and jitters are tolerable and can be further reduced by offset compensation techniques, which are also supported by the new receiver architecture.

According to the present invention different methods can be applied to reduce the uplink synchronization requirement:

1) Uplink sync offset feedback from AP to MT via the bandwidth adaptive downlink common/control channel as shown in the superframe structure (BCH-i);
2) Re-synchronization to a common downlink signal (DL SCH) by each MT, just before it starts uplink transmission as shown by a special downlink interval in the superframe structure.

All methods can be applied independent from each other, but the result can be achieved if all three methods are applied in combination.

In summary, the major technical challenges arising from the new design of the communication system according to the present invention are as follows.

MTs of different bandwidths can communicate with the AP at different times (e.g. TDMA, FDMA, CSMA based) or the same time (e.g. CDMA based)

MT of a given bandwidth class can still have multiple connections of different bit rates (multi-rate within each terminal class)

Uplink synchronization between the channel encoded symbols from MTs of different bandwidths

Low complexity implementation of the AP by a common OFDM modulation and demodulation architecture with a single FFT/IFFT engine for all MTs of different bandwidths

Low complexity implementation of RF front-end by using a common RF channel selection filter in the AP for all MTs of different bandwidths

Effective support for channel equalization

Effective support for interference mitigation

Effective support for pre-distortion or pre-equalization

Robustness to inter-carrier-interference (ICI), inter-symbol-interference (ISI), and Doppler-shift

Reduced sensitivity to timing, frequency, phase and clock offsets

Efficient MAC

It should be noted that the invention is not limited to any of the above described embodiments, such as a telecommunications network including mobile phones and base stations or a IEEE802.11a system. The invention is generally applicable in any existing or future communication systems and in terminals and access points of such communication systems for transmitting any kind of content. The invention is also not limited to any particular frequency ranges or modulation technologies.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measured cannot be used to advantage.

Any reference signs in the claims should not be construed as limiting the scope.

## Claims

1. Communication system comprising a plurality of terminals each having an uplink transmission unit (1) for transmitting radio frequency OFDM signals at a radio frequency and an access point having an uplink receiving unit (4) for concurrently receiving said radio frequency OFDM signals from at least two terminals, said OFDM signals being Orthogonal Frequency Division Multiplex (OFDM) modulated, **characterized in that** the bandwidth of said uplink transmission units and of the transmitted radio frequency OFDM signals is smaller than the bandwidth of said uplink receiving unit, that the bandwidth of at least two uplink transmission units and of their transmitted radio frequency OFDM signals is different and that the uplink transmission unit is adapted to assign different connections for concurrently transmitting radio frequency OFDM signals to different sub-carriers in the same time slots or to the same or different sub-carriers in different time slots.

2. Communication system, in particular according to claim 1, wherein the access point has a downlink transmission unit (7) for transmitting radio frequency OFDM signals at a radio frequency and that the at least two terminals each have a downlink receiving unit (11) for receiving said radio frequency OFDM signals, wherein the downlink transmitting unit of said access unit is adapted for concurrently transmitting said radio frequency OFDM signals to said at least two downlink receiving units and wherein said downlink receiving units are adapted for receiving radio frequency OFDM signal concurrently sent from said downlink transmission unit, **characterized in that** the bandwidth of said downlink transmission unit is larger than the bandwidth of said downlink receiving units, that the downlink transmission unit is adapted to generate and transmit radio frequency OFDM signals having a bandwidth that is smaller than or equal to the bandwidth of the downlink transmission unit and that is equal to the bandwidth of the downlink receiving unit by which the radio frequency OFDM signals shall be received and that the downlink transmission unit is adapted to assign different connections for concurrently transmitting radio frequency OFDM signals to different sub-carriers in the same time slots or to the same or different sub-carriers in different time slots.

3. Communication system according to claims 1 and 2, **characterized in that** the uplink transmission unit (1) and the downlink transmission unit (7) are adapted for generating and transmitting radio frequency OFDM signals having equal channel encoded symbol lengths and equal guard intervals between said OFMD symbols.

4. Communication system according to claims 1 and/or 2, **characterized in that** the uplink transmission unit (1A) and/or the downlink transmission unit (7A) comprise preamble adding means (17, 20; 79, 80) for generating and adding preambles to the transmitted radio frequency OFDM signals and that the uplink receiving unit (4) and/or the downlink receiving unit (11) comprises preamble evaluation means (43, 47; 113, 116) for detecting and evaluating the preambles in the received radio frequency OFDM signals.

5. Communication system according to claim 4, **characterized in that** the preamble adding means (17, 20; 79, 80) are adapted for adding preambles according to a Gold code.

6. Communication system according to claims 1 and 2, **characterized in that** the plurality of terminals and the access point are adapted for using a superframe structure for communicating input data and control data, a superframe comprising:

 - a downlink period (DL period) comprising downlink preambles, a number of broadcast channels (BCH-i), a number of downlink time slots for data and pilot tones, and
 - an uplink period (UL period) comprising a number of uplink time slots for data and pilot tones, each uplink time slot being preceded by a downlink synchronization sequence for frequency/clock, phase, and timing adjustment for the following time slot and a transmission-reception turnaround interval for switching the terminal from receiver mode to transmitter mode and the access point from transmitter mode to receiver mode.

7. Communication system according to claim 6, **characterized in that** the downlink periods includes a number of bandwidth class specific common control channels for terminals of different bandwidths, the common control channels being used by the access point to transmit to the terminals:

 - the duration of the current downlink period and of the following uplink period,
 - identifiers of the terminals of the bandwidth class which are expected to receive data in the current downlink period and/or to transmit data in the following uplink period,
 - updated downlink connection parameters for each active terminal,
 - parameters of an uplink random access channel associated with the common control channel,
 - an updated uplink transmission power,
 - updated uplink connection parameters for each active terminal,
 - information about frequency, phase and start time deviation of the received uplink channel encoded symbols from the common reference signal sent by the access point.

8. Method for communicating in a communication system according to claim 1 comprising a plurality of terminals each having an uplink transmission unit (1) for transmitting radio frequency OFDM signals at a radio frequency and an access point having an uplink receiving unit (4) for concurrently receiving said radio frequency OFDM signals from at least two terminals, said OFDM signals being Orthogonal Frequency Division Multiplex (OFDM) modulated, **characterized in that** the bandwidth of said uplink transmission unit and of the transmitted radio frequency OFDM signals is smaller than the bandwidth of said uplink receiving unit, that the bandwidth of at least two uplink transmission units and of their transmitted radio frequency OFDM signals is different and that different connections for concurrently transmitting radio frequency OFDM signals are assigned to different sub-carriers in the same time slots or to the same or different sub-carriers in different time slots.

9. Method, in particular according to claim 8, for communicating in a communication system according to claim 2, wherein the access point has a downlink transmission unit (7) for transmitting radio frequency OFDM signals at a radio frequency and that the at least two terminals each have a downlink receiving unit (11) for receiving said radio frequency OFDM signals, wherein the downlink transmitting unit of said access unit is adapted for concurrently transmitting said radio frequency OFDM signals to said at least two downlink receiving units and wherein said downlink receiving units are adapted for receiving radio frequency OFDM signal concurrently sent from said downlink transmission unit, **characterized in that** the bandwidth of said downlink transmission unit is larger than the bandwidth of said downlink receiving units, that the downlink transmission unit is adapted to generate and transmit radio frequency OFDM signals having a bandwidth that is smaller than or equal to the bandwidth of the downlink transmission unit and that is equal to the bandwidth of the downlink receiving unit by which the radio frequency OFDM signals shall be received and that different connections for concurrently transmitting radio frequency OFDM signals are assigned to different sub-carriers in the same time slots or to the same or different sub-carriers in different time slots.

10. Terminal for use in a communication system according to claim 1 comprising an uplink transmission unit (1) for transmitting radio frequency OFDM signals at a radio frequency for receiption by an access point having an uplink receiving unit (4) for concurrently receiving said radio frequency OFDM signals from at least two terminals, said OFDM signals being Orthogonal Frequency Division Multiplex (OFDM) modulated, **characterized in that** the bandwidth of said uplink transmission unit and of the transmitted radio frequency OFDM signals is smaller than the bandwidth of said uplink receiving unit and that the uplink transmission unit is adapted to assign different connections for concurrently transmitting radio frequency OFDM signals to different sub-carriers in the same time slots or to the same or different sub-carriers in different time slots.

11. Terminal according to claim 10, **characterized in that** the uplink transmission units (1) comprise:

- uplink OFDM modulation means (10, 11, 18, 19, 12) for converting input data signals for one or more connections with one or more terminals into a baseband OFDM signal having $N_{u\_tx}$ frequency sub-carriers spaced at a sub-carrier distance ($f_\Delta$), and
- uplink RF transmission means (16) for converting the baseband OFDM signal into the radio frequency OFDM signal and for transmitting said radio frequency OFDM signal having a bandwidth of $N_{u\_tx}$ times the sub-carrier distance ($f_\Delta$),

wherein said uplink OFDM modulation means and said uplink RF transmission means have a bandwidth of $N_{u\_tx}$ times the sub-carrier distance ($f_\Delta$).

12. Terminal according claim 11, **characterized in that** the uplink OFDM modulation means comprises:

- one or more uplink coding means (10, 11, 18) for deriving frequency domain OFDM source signals from the one or more input data signals, the frequency domain OFDM source signals comprising $N_{u\_tx}$ OFDM sub-carriers,
- uplink adding means (19) for adding the frequency domain OFDM source signals of the one or more connections, and
- uplink IFFT means (12) for performing a $N_{u\_tx}$- point Inverse Fast Fourier transform operation on the added frequency domain OFDM source signals to obtain the baseband OFDM signal.

13. Terminal according to claim 12, **characterized in that** the uplink coding means comprises:

- uplink symbol generation means (10) for mapping bits of the one or more input data signals onto complex valued channel encoded symbols,
- uplink sub-carrier mapping means (11) for mapping the complex valued channel encoded symbols of the input data signals onto $N_{u\_tx}$ OFDM sub-carriers to obtain the frequency domain OFDM source signals, the mapping being adaptive for each active connection in the considered time slot and that in the same time slot the channel encoded symbols of different connections are mapped to non-overlapping sets of sub-carriers.

14. Terminal according to claim 10 for use in a communication system according to claim 2, comprising a downlink receiving unit (11) for receiving radio frequency OFDM signals transmitted by an access point having a downlink transmission unit (7) for concurrently transmitting radio frequency OFDM signals at a radio frequency to at least two terminals, **characterized in that** the bandwidth of said downlink transmission unit is larger than the bandwidth of said downlink receiving unit, that the downlink transmission unit is adapted to generate and transmit radio frequency OFDM signals having a bandwidth that is smaller than or equal to the bandwidth of the downlink transmission unit and that is equal to the bandwidth of the downlink receiving unit by which the radio frequency OFDM signals shall be received and that the downlink receiving unit is adapted to receive different connections for concurrently transmitting radio frequency OFDM signals assigned to different sub-carriers in the same time slots or to the same or different sub-carriers in different time slots.

15. Terminal according to claim 14, **characterized in that** the downlink receiving unit (11) comprises:

- downlink RF reception means (110) for receiving a radio frequency OFDM signal and for converting the received radio frequency OFDM signal into a baseband OFDM signal, and
- downlink OFDM demodulation means (115, 122, 120, 121) for demodulating the baseband OFDM signal into one or more output data signals of one or more connections,

wherein said downlink RF reception means and said downlink OFDM demodulation means have a bandwidth of $N_{d\_rx}$ times the sub-carrier distance ($f_\Delta$), wherein $N_{d\_rx}$ is equal to or smaller than $N_{d\_tx}$.

**16.** Terminal according claim 15, **characterized in that** the downlink OFDM demodulation means comprises:

- downlink FFT means (115) for performing a $N_{d\_rx}$- point Fast Fourier Transform operation on the baseband OFDM signal to obtain a frequency domain OFDM signal, the frequency domain OFDM signal comprising $N_{d\_rx}$ frequency sub-carriers, and
- downlink decoding means (122, 120, 121) for deriving the one or more output data signals from the frequency domain OFDM signal.

**17.** Terminal according to claim 16, **characterized in that** the downlink decoding means comprises:

- downlink sub-carrier demapping means (120) for demapping the $N_{d\_rx}$ frequency sub-carriers of the frequency domain OFDM signal of said one or more connections onto complex valued channel coded symbols of the corresponding connections, and
- one or more downlink channel decoding and deinterleaving means (121) for one or more connections for demapping the complex valued channel coded symbols onto bits of the one or more output data signals.

**18.** Access point for use in a communication system according to claim 2, comprising a downlink transmission unit (7) for concurrently transmitting radio frequency OFDM signals at a radio frequency to at least two terminals having a downlink receiving unit (11) for receiving said radio frequency OFDM signals, **characterized in that** the bandwidth of said downlink transmission unit is larger than the bandwidth of said downlink receiving unit, that the downlink transmission unit is adapted to generate and transmit radio frequency OFDM signals having a bandwidth that is smaller than or equal to the bandwidth of the downlink transmission unit and that is equal to the bandwidth of the downlink receiving unit by which the radio frequency OFDM signals shall be received and that the downlink transmission unit is adapted to assign different connections for concurrently transmitting radio frequency OFDM signals to different sub-carriers in the same time slots or to the same or different sub-carriers in different time slots.

**19.** Access point according to claim 18, **characterized in that** the downlink transmission unit (7) comprises:

- downlink OFDM modulation means (70, 71, 82, 83, 73, 74) for converting one or more input data signals for one or more connections with a terminal into a baseband OFDM signal having $N_{d\_tx}$ frequency sub-carriers spaced at a sub-carrier distance ($f_\Delta$), using $N_{d\_rx}$ of said $N_{d\_tx}$ frequency sub-carriers for modulation of the input data signals, $N_{d\_rx}$ being equal to or smaller than $N_{d\_tx}$, and
- downlink RF transmission means (78) for converting the baseband OFDM signal into the radio frequency OFDM signal and for transmitting said radio frequency OFDM signal having a bandwidth of $N_{d\_tx}$ times the sub-carrier distance ($f_\Delta$),

wherein said downlink OFDM modulation means and said downlink RF transmission means have a bandwidth of $N_{d\_tx}$ times the sub-carrier distance ($f_\Delta$).

**20.** Access point according claim 19, **characterized in that** the downlink OFDM modulation means comprises:

- one or more downlink coding means (70, 71, 82) for deriving one or more frequency domain OFDM source signals from the one or more input data signals, the frequency domain OFDM source signals comprising $N_{d\_rx}$ OFDM sub-carriers, $N_{d\_rx}$ times the sub-carrier distance ($f_\Delta$) being the bandwidth of the terminal to which an input data signal shall be transmitted,
- first downlink adding means (83) for adding the frequency domain OFDM source signals of the one or more connections,
- downlink construction means (73) for obtaining $N_{d\_tx}$ frequency sub-carriers from the $N_{d\_rx}$ frequency sub-carriers of the added frequency domain OFDM source signals, and
- downlink IFFT means (74) for performing a $N_{d\_tx}$ - point Inverse Fast Fourier Transform operation on the $N_{d\_tx}$ frequency sub-carriers of the added frequency domain OFDM source signals to obtain the baseband OFDM signal.

**21.** Access point according to claim 20, **characterized in that** the downlink coding means comprises:

- downlink symbol generation means (70) for mapping bits of the one or more input data signal onto complex valued channel encoded symbols,
- downlink sub-carrier mapping means (71) for mapping the complex valued channel encoded symbols of the input data signals onto $N_{d\_rx}$ OFDM sub-carriers to obtain the frequency domain OFDM source signals, the mapping being adaptive for each active connection in the considered time slot and that in the same time slot the channel encoded symbols of different connections are mapped to non-overlapping sets of sub-carriers.

**22.** Access point according to claim 20 or 21, **characterized in that** the downlink OFDM modulation means comprises:

- one or more MT downlink coding means (70s, 71s, 82s, 70t, 71t, 82t) each comprising one or more of said downlink coding means, one first downlink adding means and one downlink construction means, wherein the MT downlink coding means are adapted for different bandwidths of different terminals,
- second downlink adding means (84) for adding the frequency sub-carrier signals provided by said MT downlink coding means.

**23.** Access point according to claim 20, **characterized in that** the downlink construction means (73) is adapted for obtaining the baseband OFDM signal by mapping essentially the $N_{d\_rx}/2$ first sub-carriers onto the $N_{d\_rx}/2$ first sub-carriers and the $N_{d\_rx}/2$ last sub-carriers onto the $N_{d\_rx}/2$ last sub-carriers of the frequency domain $N_{d\_tx}$ OFDM signal and by setting the remaining $N_{d\_tx}- N_{d\_rx}$ unused sub-carriers to zero.

**24.** Access point for use in a communication system according to claim 1 comprising an uplink receiving unit (4) for concurrently receiving radio frequency OFDM signals from at least two terminals having an uplink transmission unit (1) for transmitting radio frequency OFDM signals at a radio frequency, said OFDM signals being Orthogonal Frequency Division Multiplex (OFDM) modulated, **characterized in that** the bandwidth of said uplink transmission unit and of the transmitted radio frequency OFDM signals is smaller than the bandwidth of said uplink receiving unit and that the uplink receiving unit is adapted to receive different connections for concurrently transmitting radio frequency OFDM signals assigned to different sub-carriers in the same time slots or to the same or different sub-carriers in different time slots.

**25.** Access point according to claim 24, **characterized in that** the uplink receiving unit comprises:

- uplink RF reception means (40) for receiving a radio frequency OFDM signal and for converting the received radio frequency OFDM signal into a baseband OFDM signal, and
- uplink OFDM demodulation means (45, 46, 51, 52) for demodulating the baseband OFDM signal into one or more output data signals of one or more connections with one or more terminals,

wherein said uplink RF reception means and said uplink OFDM demodulation means have a bandwidth of $N_{u\_rx}$ times the sub-carrier distance ($f_\Delta$), wherein $N_{u\_rx}$ is equal to or larger than $N_{u\_tx}$ of said plurality of terminals.

**26.** Access point according claim 25, **characterized in that** the uplink OFDM demodulation means comprises:

- uplink FFT means (45) for performing a $N_{u\_rx}$- point Fast Fourier Transform operation on the baseband OFDM signal to obtain a frequency domain OFDM signal, the frequency domain OFDM signal comprising $N_{u\_rx}$ OFDM sub-carriers, and
- one or more uplink restoration means (46, 56, 51, 52) for deriving the one or more output data signals from the frequency domain OFDM signal.

**27.** Access point according to claim 25, **characterized in that** the uplink OFDM demodulation means comprises P uplink restoration means (46s, 56s, 51s, 52s, 46t, 56t, 51t, 52t), P being an integer larger than one, for concurrently deriving P output data signals transmitted from P different terminals from the frequency domain OFDM signal, the bandwidths of said P uplink restoration means being different and adapted to the different bandwidths of the plurality of terminals.

**28.** Access point according to claim 25, **characterized in that** the uplink OFDM demodulation means comprises one uplink restoration means (46, 51, 52) for deriving an output data signal from the frequency domain OFDM signal, the bandwidth of said uplink restoration means being adaptable to the bandwidth of the terminal from which said data signal has been transmitted.

29. Access point according to claim 25, **characterized in that** the uplink restoration means comprises:

- uplink reconstruction means (46) for reconstructing $N_{u\_tx}$ sent OFDM sub-carriers from the received $N_{u\_rx}$ OFDM sub-carriers of the frequency domain OFDM signal,

wherein the $N_{u\_tx}$ frequency sub-carriers represent the concurrently received radio frequency OFDM signals,

- uplink sub-carrier demapping means (51) for demapping the $N_{u\_tx}$ frequency sub-carriers of the frequency domain OFDM signal of one or more connections onto complex valued channel coded symbols of the corresponding connections, and
- one or more uplink channel decoding and deinterleaving means (52) for one or more connections for demapping the complex valued channel coded symbols onto bits of the output data signal.

30. Access point according to claim 28, **characterized in that** the uplink reconstruction means (46) is adapted for reconstructing the $N_{u\_tx}$ frequency sub-carriers from the $N_{u\_rx}$ frequency sub-carriers of the frequency domain OFDM signal by selecting essentially the $N_{u\_tx}/2$ first and the $N_{u\_tx}/2$ last sub-carriers of the frequency domain $N_{u\_rx}$ point OFDM signal.

31. Access point according to claims 18 and 24, **characterized in that** the uplink receiving unit (4) and the downlink transmission unit (7) of the access point are adapted for receiving and transmitting, respectively, of radio frequency OFDM signals having different bandwidths.

# FIG.1

Connection i data → Channel Encoder & Interleaver (10i) — A1i → Sub-carrier Mapper (11i) — B1i →

Connection j data → Channel Encoder & Interleaver (10j) — A1j → Sub-carrier Mapper (11j) — B1j →

⊕ (19) → $N_{u\_tx}$point IFFT (12) →

→ RF Frontend (BW=$N_{u\_tx}f_\Delta$) (16) ← DAC (15) ← Power Shaping LPF (BW=$N_{u\_tx}f_\Delta$) (14) ← GP Inserter (13) ←

1

# FIG.2

a_1(k)  a_3(k)  a_5(k)  a_7(k)  a_9(k)    MT transmitter based

0                                    $N_{u\_tx}$-1  FFT index

a_2(k)  a_4(k)  a_6(k)  a_8(k)  a_10(k)

# FIG.3

Cyclic prefix with $N_{u\_tx\_gp}$ sampling points

Original time domain OFDM symbol with $N_{u\_tx}$ sampling points

Time index

FIG.4

RF Frontend (BW=$N_{u\_rx}f_\Delta$) — 40

ADC — 41

Digital LPF (BW=$N_{u\_rx}f_\Delta$) — 42

GP Remover — 44

$N_{u\_rx}$ point FFT — 45

$F4_{AP(i)}$

Time-Domain Frequency/Phase/Timing Offsets Estimator — 43

Windowing for MT_s — 46s

Windowing for MT_t — 46t

$E4_{MT\_s(i)}$

$E4_{MT\_t(i)}$

Frequency Domain Frequency/Phase/Timing Offsets Estimator — 47t

Frequency/Phase/Timing Offsets Compensator — 48t

Frequency/Phase/Timing Offsets Compensator — 48s

Frequency Domain Frequency/Phase/Timing Offsets Estimator — 47s

D4t

D4s

Channel Equalizer — 49t

Channel Equalizer — 49s

C4t

C4s

MT specific Data Detector — 50t

MT specific Data Detector — 50s

Sub-carrier Demapper — 51s

Sub-carrier Demapper — 51t

A4si

A4sj

A4ti

A4tj

Channel Decoder & Deinterleaver — 52si

Channel Decoder & Deinterleaver — 52sj

Channel Decoder & Deinterleaver — 52ti

Channel Decoder & Deinterleaver — 52tj

Connection i Data of MT_s

Connection j Data of MT_s

Connection i Data of MT_t

Connection j Data of MT_t

4

GP with
with $N_{u\_rx\_gp}$
sampling
points

Original time domain OFDM symbol
with $N_{u\_rx}$ sampling points

Time index

⇓ GP Remover

Original time domain OFDM symbol
with $N_{u\_rx}$ sampling points

Time index

# FIG.5

AP receiver based
FFT Index

0          $N_{u\_tx\_t}/2-1$     $N_{u\_rx}-N_{u\_tx\_t}/2$                $N_{u\_rx}-1$

0                          $N_{u\_tx\_t}-1$          MT transmitter based
                                                      FFT Index

# FIG.6

# FIG.7

Connection i
Data of MT_s

Channel
Encoder
&
Interleaver

70si

A7si

Sub-carrier
Mapper

71si

B7si

7'

Connection j
Data of MT_s

Channel
Encoder
&
Interleaver

70si    70sj

A7sj

Sub-carrier
Mapper

71sj

B7sj

$E7_{MT\_s(i)}$

73s

Index
Shifter

19

7

84

Connection i
Data of MT_t

70ti

Channel
Encoder
&
Interleaver

A7ti

71ti

Sub-carrier
Mapper

B7ti

Connection j
Data of MT_t

Channel
Encoder
&
Interleaver

70tj

A7tj

71tj

Sub-carrier
Mapper

B7tj

$E7_{MT\_t(i)}$

83t

73t

Index
Shifter

74

RF Frontend
$(BW=N_{d\_tx}f_\Delta)$

78

77

DAC

76

Power Shaping
LPF
$(BW=N_{d\_tx}f_\Delta)$

GP
Inserter

75

$N_{d\_tx}$point
IFFT

$F7_{AP(i)}$

EP 1 895 703 A1

24

a_1(k)  a_3(k)    a_5(k)          a_7(k)  a_9(k)

0                                              $N_{d\_tx\_t}-1$

      a_2(k)  a_4(k)          a_6(k)  a_8(k)  a_10(k)    MT receiver
                                                        based
## FIG.8                                                FFT index

Power-Shaping
LPF

a_5(k)

a_1(k)  a_3(k)                    a_7(k)  a_9(k)

0                                              $N_{d\_tx\_t}-1$

      a_2(k)  a_4(k)          a_6(k)  a_8(k)  a_10(k)    MT receiver
                                                        based
## FIG.9                                                FFT index

0                                          MT transmitter based
                        $N_{d\_tx\_t}-1$        FFT Index

0      $N_{d\_tx\_1}/2-1$          $N_{d\_rx\_t}-N_{d\_tx\_t}/2$    $N_{d\_rx\_t}-1$

                                                        AP receiver based
## FIG.10                                               FFT Index

FIG.11

RF Frontend $(BW=N_{d\_rx}f_{\Delta})$ — 110

ADC — 111

LPF — 112

GP Remover — 114

Time-Domain Frequency/Phase/Timing Offsets Estimator — 113

$N_{d\_rx}$point FFT — 115

E11

Frequency/Phase/Timing Offsets Compensator — 117

Frequency-Domain Frequency/Phase/Timing Offsets Estimator — 116

D11

Channel Equalizer — 118

C11

MT specific Data Detector — 119

Sub-carrier Demapper — 120

Channel Decoder & Deinterleaver — 121i

A11i

Connection i Data

Channel Decoder & Deinterleaver — 121j

A11j

Connection j Data

11

GP with
with $N_{d\_rx\_gp}$
sampling
points

Original time domain OFDM symbol
with $N_{d\_rx\_gp}$ sampling points

Time index

⇩ GP Remover

Original time domain OFDM symbol
with $N_{rx}$ sampling points

Time index

FIG.12

FIG.13

FIG.14A

FIG.14B

FIG.14C

EP 1 895 703 A1

EP 1 895 703 A1

FIG.15

EP 1 895 703 A1

FIG.16

| DL preambles | BCH-i | DL Data & Pilot (p TS) | TX-RX Turnaround | RACH (r TS) | TX-RX Turnaround | DL SCH | TX-RX Turnaround | UL Data & Pilot (q TS) | TX-RX Turnaround | DL SCH | TX-RX Turnaround | UL Data & Pilot (q TS) | .. | TX-RX Turnaround | DL SCH | TX-RX Turnaround | UL Data & Pilot (q TS) | TX-RX Turnaround | DL preambles | BCH-i | DL Data & Pilot (p TS) | ... |

DL Period        UL Period

# FIG.17

AP

4    7

MT1     1    11

MT2     1    11

# FIG.18

**European Patent Office**

**EUROPEAN SEARCH REPORT**

Application Number

EP 06 11 6662

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 01/48969 A2 (ATHEROS COMM INC [US]) 5 July 2001 (2001-07-05) <br><br> * page 4 - page 6 * <br> * figures 3,4 * | 1-4, 8-12, 14-18, 24-29,31 | INV. <br> H04L5/02 <br> H04L25/02 <br> H04L27/26 <br> H04B7/26 |
| Y | | 5,13, 19-22,30 | |
| A | | 6,7 | |
| Y | WENFEI XIE ET AL: "Comparison of carrier frequency offset estimation schemes based on APSSB and preamble in OFDMA in fading channel" <br> VEHICULAR TECHNOLOGY CONFERENCE, 2005. VTC-2005-FALL. 2005 IEEE 62ND DALLAS, TX, USA 25-28 SEPT., 2005, PISCATAWAY, NJ, USA,IEEE, 25 September 2005 (2005-09-25), pages 1609-1612, XP010878716 <br> ISBN: 0-7803-9152-7 <br> * page 1609 * <br> * page 1610, left-hand column * <br> * figure 2 on page 1610 * | 5 | |
| | | | TECHNICAL FIELDS SEARCHED (IPC) <br><br> H04L <br> H04B |
| X | WO 01/82544 A (ATHEROS COMM INC [US]) 1 November 2001 (2001-11-01) <br><br> * page 4 - page 6 * <br> * figures 3,4 * | 1-4, 8-12, 14-18, 24-29,31 | |
| A | | 6,7 | |
| | -/-- | | |

The present search report has been drawn up for all claims

| Place of search | Date of completion of the search | Examiner |
|---|---|---|
| Munich | 23 March 2007 | Baltersee, Jens |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 06 11 6662

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | VAN DE BEEK JAN-JAAP ET AL: "A TIME AND FREQUENCY SYNCHRONIZATION SCHEME FOR MULTIUSER OFDM" IEEE JOURNAL ON SELECTED AREAS IN COMMUNICATIONS, IEEE SERVICE CENTER, PISCATAWAY, NJ, US, vol. 17, no. 11, November 1999 (1999-11), pages 1900-1913, XP000880706 ISSN: 0733-8716 * page 1903, right-hand column, 2nd paragraph * | 6,7 | |
| A | TOMCIK J AND CANCHI R: "MBFDD and MBTDD: Proposed Draft Air Interface Specification" 7 January 2006 (2006-01-07), IEEE 802.20 WORKING GROUP ON MOBILE BROADBAND WIRELESS ACESS , XP002426422 Retrieved from the Internet: URL:http://www.ieee802.org/20/Contribs/C80 2.20-06-04.pdf> * page 353 - page 355 * | 6,7 | |
| Y | US 6 816 555 B2 (SAKODA KAZUYUKI [JP]) 9 November 2004 (2004-11-09) * figures 1A,21A * | 13 | |
| Y | SPETH M: "Systemkomponenten für codierte OFDM-Übertragung mit Sender- und Empfängerdiversität" 2001, SHAKER VERLAG , AACHEN, GERMANY , XP002426425 ISBN: 3-8265-8853-3 * page 8, 2nd paragraph * | 19-22 | |

**TECHNICAL FIELDS SEARCHED (IPC)**

-/--

The present search report has been drawn up for all claims

| Place of search | Date of completion of the search | Examiner |
|---|---|---|
| Munich | 23 March 2007 | Baltersee, Jens |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 895 703 A1**

European Patent Office

**EUROPEAN SEARCH REPORT**

Application Number

EP 06 11 6662

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | STRUM R D AND KIRK D E: "First Principles of Discrete Systems and Digital Signal Processing" 1988, ADDISON-WESLEY PUBLISHING COMPANY , READING, MASSACHUSETTS, USA , XP002426442 ISBN: 0-201-09518-1 * page 387 - page 392 * ----- | 30 | |
| | | | **TECHNICAL FIELDS SEARCHED (IPC)** |

The present search report has been drawn up for all claims

| Place of search | Date of completion of the search | Examiner |
|---|---|---|
| Munich | 23 March 2007 | Baltersee, Jens |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent

Office

Application Number

EP 06 11 6662

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

European Patent
Office

**LACK OF UNITY OF INVENTION
SHEET B**

Application Number

EP 06 11 6662

The Search Division considers that the present European patent application does not comply with the requirements of unity of invention and relates to several inventions or groups of inventions, namely:

1. claims: 1, 2, 3, 4, 5, 8, 9, 10, 11, 12, 14, 15, 16, 17, 18, 24, 25, 26, 27, 28, 29, 31

   Design of the preambles in an asymmetric OFDM communication system
   ---

2. claims: 6, 7

   Design of the data structure in an asymmetric OFDM communication system
   ---

3. claim: 13

   Adaptive mapping, in a terminal, of different connections to subcarriers
   ---

4. claims: 19-22

   Avoiding ICI caused by the spectral extension due to time-domain windowing
   ---

5. claim: 30

   Reconstructing an output data signal from the received uplink signals
   ---

## ANNEX TO THE EUROPEAN SEARCH REPORT
## ON EUROPEAN PATENT APPLICATION NO.

EP 06 11 6662

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2007

| Patent document cited in search report | | Publication date | Patent family member(s) | | Publication date |
|---|---|---|---|---|---|
| WO 0148969 | A2 | 05-07-2001 | AU<br>TW<br>US<br>US | 2443501 A<br>536901 B<br>6628673 B1<br>2004090933 A1 | 09-07-2001<br>11-06-2003<br>30-09-2003<br>13-05-2004 |
| WO 0182544 | A | 01-11-2001 | AU<br>EP<br>TW<br>US | 5714301 A<br>1275230 A2<br>573415 B<br>6807146 B1 | 07-11-2001<br>15-01-2003<br>21-01-2004<br>19-10-2004 |
| US 6816555 | B2 | 09-11-2004 | US | 2001040928 A1 | 15-11-2001 |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **L. HANZO ; M. MUENSTER ; B.J. CHOI ; T. KEL-LER.** OFDM and MC-CDMA for Broadband Multi-User Communications, WLANs and Broadcasting. John Wiley & Sons, June 2004